# EUROPÄISCHE PATENTSCHRIFT

(11) **EP 2 969 248 B1**
(45) Veröffentlichungstag und Bekanntmachung des Hinweises auf die Patenterteilung: **15.02.2017**
(21) Anmeldenummer: 14711943.2
(22) Anmeldetag: 13.03.2014
(51) Int. Cl.: F16K 11/04, F16K 51/00, F16K 17/00, G05D 7/06, B05C 5/02

(54) **DOSIERVENTIL UND DOSIERVERFAHREN**
METERING VALVE AND METERING METHOD
SOUPAPE DE DOSAGE ET PROCÉDÉ DE DOSAGE

(30) Priorität: 15.03.2013 DE 102013102693
(43) Veröffentlichungstag der Anmeldung: 20.01.2016
(73) Patentinhaber: Vermes Microdispensing GmbH, 83624 Otterfing (DE)
(72) Erfinder: STÄDTLER, Jürgen, 83620 Feldkirchen-Westerham (DE); FLIEß, Mario, 81549 München (DE)
(74) Vertreter: Beckord & Niedlich
(86) Internationale Anmeldenummer: PCT/EP2014/054990
(87) Internationale Veröffentlichungsnummer: WO 2014/140195

(56) Entgegenhaltungen:
- WO-A1-99/64167
- DE-C1- 4 325 143
- US-A- 4 669 660

## Beschreibung

Die vorliegende Erfindung betrifft ein Dosierventil mit einer Ventilkammer, welche eine Austrittsöffnung aufweist, einem in oder an der Ventilkammer angeordneten Verschlusselement und einer Aktoreinrichtung. Sie betrifft außerdem ein Dosierverfahren für einen Dosierstoff.

Die Abgabe von flüssigen bis zähflüssigen Dosierstoffen, beispielsweise von Klebstoffen, Farben, Drucklacken, in einem Bindersystem gebundenen leitenden Substanzen wie Lotpasten, Convertermaterialien für LEDs (also meist zähflüssigen Pasten mit hohem Füllstoff-Anteil, insbesondere keramischen Füllstoffen) u.v.m. dient der gezielten Aufbringung solcher Dosierstoffe auf Zieloberflächen. Beispielsweise werden elektronische Leiterplatinen gezielt und punktgenau mit leitenden Substanzen versehen, was relativ unflexible Prozesse, etwa Maskenprozesse oder Rakelprozesse, ersetzt. Eine wichtige Anforderung besteht dabei darin, die Dosierstoffe hochgenau, das heißt zum richtigen Zeitpunkt, am richtigen Ort und in einer genau dosierten Menge auf die Zieloberfläche zu befördern. Dies kann also beispielsweise dadurch erfolgen, dass eine tröpfchenweise Abgabe über die Düse eines Dosiersystems erfolgt, wobei die Größe und/oder die Menge der Tröpfchen durch die Wirkung der Düse möglichst genau vorherbestimmt werden. Alternativ kann der Dosierstoff in einem Strahl aufgespritzt oder in einem Nebel aufgesprüht werden.

Derzeit gebräuchliche Dosierventile der eingangs genannten Art, vgl. z.B. DE 43 25 143, weisen eine Aktoreinrichtung auf, die das Verschlusselement im Betrieb in einer Ausstoß- und in einer Rückzugsrichtung bewegt. Als Verschlusselement wird meist ein länglicher Stößel verwendet, der die Austrittsöffnung der Düse des Dosierventils durch die Bewegung in Ausstoßrichtung vollständig verschließt. Bei einer Bewegung des Stößels in die Ausstoßrichtung wird Dosierstoff vom Stößel durch die Austrittsöffnung ausgestoßen.

Eine Alternative zu diesem festen Verschluss der Austrittsöffnung durch ein Verschlusselement ist in der US-Patentschrift 7 767 266 B2 angedeutet. Sie beschreibt ein Dosierventil, das als offenes System realisiert ist: Ein Dosierstoff wird mithilfe einer Dosierschraube in Richtung einer Austrittsöffnung einer Düse befördert und passiert dabei entlang eines Durchlassspalts einen Stößel, bevor er in einen Sammelhohlraum gelangt, der durch den Stößel verdichtet werden kann. Ein solch offenes System ist dadurch gekennzeichnet, dass der Dosierstoff theoretisch ungehindert in Richtung der Austrittsöffnung fließen könnte und nur durch seine Viskosität daran gehindert wird. Hierzu muss der Durchlassspalt ausreichend groß dimensioniert sein. Die offene Ausbildung der Dosiervorrichtung bedeutet auch, dass der Durchfluss des Dosierstoffs durch Betätigung der Dosierschraube und unter Anlegen eines extrem hohen Drucks erzeugt wird, da sonst die hohe Viskosität des Dosierstoffs den Durchfluss verhindert. Eine solche Dosierschraube stellt ein im Vergleich zu geschlossenen Systemen zusätzliches Element dar; vor allem aber muss die Dosiervorrichtung für die hohen Drücke ausgelegt sein, was einen erheblichen Materialmehraufwand bedeutet. Dennoch lässt sich ein erhöhter Materialverschleiß und damit eine höhere Wartungsanfälligkeit auch mit hochwertigen und verstärkten Materialien aufgrund der hohen Drücke nicht verhindern.

Weiterhin gibt es Düsen zum Aufsprühen von fließfähigen Medien, beispielsweise Farben, auf eine zu besprühende Oberfläche, bei denen das Medium mit Druckluft beaufschlagt und durch eine Düse gepresst wird. Ein Beispiel hierfür wird in der DE 10 2005 011 043 A1 beschrieben. Um die bei einem bestimmten Druck abgegebene Menge pro Zeit einzustellen, ragt hier in den Austrittsquerschnitt der Düse eine Nadel mit ihrer Spitze hinein, wobei die Düse in ihrer Lage bezüglich zur Nadel justierbar ist, um so für einen Auftragsvorgang den Austrittsquerschnitt in seiner lichten Weite verändern zu können. So kann beispielsweise bestimmt werden, wie dick das zu versprühende Medium auf die Oberfläche aufgetragen wird. Eine solche Düse ist beispielsweise für Lackierpistolen geeignet, jedoch nicht zur hochfeinen, insbesondere tröpfchenweise, Dosierung von Stoffen.

Die Herausforderung einer hochgenauen Dosierung ist insbesondere dann besonders groß, wenn es sich bei dem Dosierstoff eben nicht um eine leichtflüssige Substanz, etwa mit einer Konsistenz ähnlich der von Wasser, handelt, sondern um ein relativ zähflüssiges Medium. Beispiele hierfür sind hoch angereicherte Klebstoffe, stark pigmentangereicherte Farben bzw. Lacke mit einem hohen Pigmentanteil u. v. m. So ist die Dosierung auch bei Substanzen mit (hohen) Polymeranteilen, speziell an langkettigen Polymeren, besonders kompliziert. Die meist hohe Viskosität all dieser Dosierstoffe bedingt grundsätzlich - wie auch oben erwähnt -, dass sehr hohe Drücke notwendig sind, um die Dosierstoffe gezielt und feingenau aus der Düse eines Dosiersystems zu befördern. Solche hohen Drücke sind allgemein nur schwer herzustellen und aufrechtzuerhalten, insbesondere deshalb, weil dann auch Dichtungen und andere empfindlichere Bauteile im Dosiersystem entsprechend druckresistent auszuführen sind. Dem Druck des Dosierstoffs sind außerdem auch dadurch gewisse Grenzen gesetzt, dass der Dosierstoff aufgrund des Drucks in Richtung der jeweiligen Zieloberfläche beschleunigt wird. Eine zu hohe Auftreffgeschwindigkeit auf der Zieloberfläche aufgrund zu hoher Beschleunigung aus der Düse bedeutet eine Verschlechterung des Dosierergebnisses, nämlich eine erhöhte Unschärfe des Dosierstoff-Auftrags auf der Zieloberfläche.

Allgemein wird unter einem flüssigen bis zähflüssigen Dosierstoff jede Flüssigkeit beziehungsweise jedes eine Flüssigkeit umfassende Stoffgemisch mit Fließeigenschaften definiert. Die Definition von Zähflüssigkeit erstreckt sich hierbei von einer Viskosität oberhalb der von Wasser bis zu einer Viskosität, die nahezu den Eigenschaften eines Feststoffs entspricht. Insbesondere werden als zähflüssige Dosierstoffe solche mit thixotropen bzw. scherverdünnenden (d. h. strukturviskosen) Eigenschaften bezeichnet. Dies bedeutet, dass die Viskosität eines Dosierstoffs in einem Ruhezustand höher ist als in einem Bewegungszustand und dass bei der Rückkehr in einen Ruhezustand die ursprüngliche höhere Viskosität zumindest annähernd (ggf. nach einer gewissen Ruhephase) wieder erreicht wird. Als zähflüssig werden daher auch noch Stoffe bzw. Medien bezeichnet, die in einem Ruhezustand (Quasi-)Eigenschaften eines Feststoffs aufweisen und die lediglich im Bewegungszustand fließfähig sind.

Um die Dosierstoffe hochgenau abzugeben, ist es von besonderer Bedeutung, einen hochfein definierten Abriss des Dosierstoffs an der Düse eines Dosierventils zu bewerkstelligen, so dass die Menge des abgegebenen Dosierstoffs möglichst genau vorab definiert abgegeben wird und dann - nach dem Verschließen des Dosierventils - kein weiterer Materialfluss des Dosierstoffs aus der Düse heraus erfolgt. Mit anderen Worten soll der Verschlussmechanismus des Dosierventils besonders schnell und effektiv schließen können, um einen praktisch instantanen Abriss des Dosierstoffs bei einem Ende eines Abgabevorgangs zu gewährleisten. Als solches Ende eines Abgabevorgangs kann sowohl die (auch zeitweise) Unterbrechung eines Strahls des Dosierstoffs als auch das Ende einer einzelnen Tröpfchen-Abgabe des Dosierstoffs vor einer nächsten Tröpfchen-Abgabe bezeichnet werden.

Der instantane Abriss eines Dosierstoffs an der Düse, d.h. der Düsenöffnung der Düse, ist insbesondere dann besonders schwer zu bewerkstelligen, wenn der Dosierstoff stark polymere Eigenschaften aufweist. Dann ist typischerweise der Teil des Dosierstoffs, der die Düsenöffnung bereits verlassen hat, mit dem noch in der Düse vorhandenen Teil des Dosierstoffs über einen relativ zähen Medien-"Faden" verbunden. Gerade dieser Faden muss beim Ende des Abgabevorgangs abgetrennt werden.

Aufgabe der vorliegenden Erfindung ist es, eine alternative Möglichkeit bereitzustellen, wie ein Dosierventil der eingangs genannten Art effektiv geschlossen bzw. geöffnet werden kann. Diese Alternative soll insbesondere bevorzugt einen besonders fein definierten Abriss des Durchflusses eines Dosierstoffs ermöglichen. Besonderes Augenmerk wird dabei vorzugsweise auf eine effektivere, d.h. feinere Dosierbarkeit zähflüssiger, vor allem thixotroper und/oder scherverdünnender Dosierstoffe gelegt.

Diese Aufgabe wird durch ein Dosiersystem gemäß Anspruch 1 und durch ein Dosierverfahren gemäß Anspruch 14 gelöst.

Erfindungsgemäß weist ein erfindungsgemäßes Dosierventil hierzu eine Aktoreinrichtung auf, um die Austrittsöffnung, und dabei bevorzugt zumindest Teile bzw. Bereiche der Ventilkammer, welche die Austrittsöffnung umfassen, bevorzugt sogar die Ventilkammer insgesamt, gegenüber der Ventilkammer-Lagerung im Betrieb in einer Ausstoß- und/oder Rückzugsrichtung so zu bewegen, dass im Betrieb in zumindest einem Bewegungsmodus (bzw. in zumindest einer vorgegebenen Betriebsart) bei einer Bewegung der Austrittsöffnung in die Ausstoßrichtung Dosierstoff vom Stößel durch die Austrittsöffnung gestoßen wird. Die Aktoreinrichtung ist also so ausgebildet und angeordnet, dass sie die Austrittsöffnung direkt und/oder indirekt bewegt. Wie später noch erläutert wird, kann das Dosierventil so ausgebildet sein bzw. mithilfe einer geeigneten Steuereinrichtung so angesteuert werden, dass es in verschiedenen Bewegungsmodi bzw. Betriebsarten betrieben werden kann. Zumindest in einer Betriebsart wird hierbei die Relativbewegung zwischen Stößel und Austrittsöffnung dazu genutzt, um eine bei jeder Bewegung in die Ausstoßrichtung eine möglichst genau bestimmte (dosierte) Menge Dosierstoff möglichst schnell aus der Austrittsöffnung zu befördern. Insbesondere bei hoch präzisen Dosierventilen machen sich die Vorteile des Verfahrens bemerkbar, da hier eine schnelle Relativbewegung zwischen Stößel und Austrittsöffnung wünschenswert ist.

Die Erfindung wendet sich also davon ab, ausschließlich das Verschlusselement in der Ausstoß- bzw. Rückzugsrichtung zu bewegen, sondern ersetzt die Bewegung des Verschlusselements ganz oder zumindest teilweise durch eine Bewegung der Austrittsöffnung, vorzugsweise zumindest eines Teils oder Bereichs der Ventilkammer. Die Ventilkammer ist dabei ein Hohlraum, der bevorzugt durch ein Ventilkammerelement definiert bzw. gebildet wird, in dessen Innenraum sich dieser Hohlraum erstreckt und das den Hohlraum in seinen Dimensionen und seiner Anordnung (d. h. seiner Position und/oder Ausrichtung) definiert. Das Ventilkammerelement wird dabei als Teil der Ventilkammer verstanden, bzw. die Begriffe Ventilkammer und Ventilkammerelement werden im Folgenden synonym verwendet. Das Ventilkammerelement kann in diesem Zusammenhang als mechanisches Koppelelement fungieren, das die durch die Aktoreinrichtung ausgeübten Kräfte und Bewegungen so weiterleitet, dass hieraus die gewünschte Bewegung der Austrittsöffnung in die Ausstoß- bzw. Rückzugsrichtung resultiert. Die Innendimension (Höhenabmessung bzw. Volumen) der Ventilkammer werden bei dem erfindungsgemäßen Verfahren im Aktorbetrieb je nach Bewegungsrichtung kleiner oder größer.

Die Austrittsöffnung wird als ein zylindrischer oder sich (beispielsweise konisch) verjüngender Kanal definiert, der vom Inneren des Dosierventils hin zum Äußeren des Dosierventils führt. Die Austrittsöffnung ist daher auf der einen Seite durch das Innere des Dosierventils bzw. der Ventilkammer und auf der anderen durch dessen äußere Umgebung begrenzt sowie umlaufend durch eine Düsen- bzw. Blendenvorrichtung, die den Kanal der Austrittsöffnung definiert, und die als ein Teil der Ventilkammer angesehen werden kann. Die Oberfläche dieser Düsen- bzw. Blendenvorrichtung hin zum Kanal der Austrittsöffnung wird noch als zur Austrittsöffnung zugehörig definiert, so dass sich die Position und die Bewegung der Austrittsöffnung durch die Position bzw. Bewegung der Düsen- bzw. Blendenvorrichtung ergeben.

Wie beim Stand der Technik auch werden also das Verschlusselement und die Austrittsöffnung in einer Relativbewegung aufeinander zu bzw. voneinander weg bewegt, doch wird diese Relativbewegung nun zumindest nicht mehr ausschließlich vom Verschlusselement vollzogen, sondern zumindest teilweise oder gar ganz durch die Austrittsöffnung.

Durch die Bewegung der Austrittsöffnung mithilfe der Aktoreinrichtung entsteht also zunächst auch derselbe Effekt wie beim oben erwähnten Stand der Technik, nämlich eine Lageveränderung des Verschlusselements und der Austrittsöffnung zueinander. Hieraus kann also bei einem geschlossenen System eine Öffnungs- und Verschlussbewegung des Dosierventils realisiert werden, wobei die Verschlussbewegung eine Bewegung in die Ausstoßrichtung ist, d. h. es wird Dosierstoß ausgestoßen und schließlich das Ventil geschlossen. Dabei kann die Erfindung bevorzugt dazu beitragen, die Verschlusswirkung des Dosierventils noch effektiver zu machen. Hierbei, aber auch bei einem offenen System, kann auch durch die genaue Definition der Ausstoß- und Rückzugsbewegung r eine Art Drosselung bzw. Erhöhung des möglichen Durchflusses des Dosierstoffs erfolgen.

Im ersten Falle wirkt die Bewegung der Austrittsöffnung in Richtung des Verschlusselements entgegen der Strömungsrichtung des Dosierstoffs, der ja aus Richtung des Inneren des Dosierventils, also vom Verschlusselement weg bzw. durch das Verschlusselement oder zumindest dadurch unterstützt durch die Austrittsöffnung nach außen befördert wird. Dieser Dosierstoff kann mit dieser gezielten Gegenbewegung am Ende abrupt abgerissen werden. Die Erfindung macht es sich in diesem Fall also zu Nutze, dass der Strahl des Dosierstoffs in einer bestimmten vordefinierten Strömungsrichtung aus der Austrittsöffnung verläuft. Gegen diese Strömung wird nun durch die Austrittsöffnung, bzw. durch die Ventilkammer oder deren die Austrittsöffnung bildenden Teile, eine Gegenbewegung ausgeübt, die dazu führt, dass der Strahl des Dosierstoffs plötzlich und abrupt unterbrochen wird und somit ein klar definierter Abriss des Strahls erfolgt. Speziell bei scherverdünnenden bzw. thixotropen Dosierstoffen kann durch diesen abrupten Abriss bzw. durch die gezielte Gegenbewegung der Austrittsöffnung gegen die Strömungsrichtung der Materialfluss des Dosierstoffs klarer definiert unterbrochen werden als dies im Stand der Technik der Fall ist.

Praktisch analog kann der "Verschlussmechanismus" auch bei einem offenen System verstanden werden, nur dass hier der Durchfluss des Dosierstoffs nicht durch ein vollkommenes Verschließen der Austrittsöffnung unterbrochen wird, sondern, abhängig von der Viskosität des Dosierstoffs, durch ein Reduzieren des Durchlassspaltes ein weiteres Austreten von Dosierstoff verhindert wird oder der Materialfluss entsprechend gedrosselt wird.

Schwerpunktmäßig können im Rahmen dessen im Speziellen zwei Kategorien von Dosierstoffen, d. h. Medien bzw. Dosiermedien, besonders effektiv und fein dosiert werden: Hierbei handelt es sich einerseits um Lotpasten bzw. Leitklebstoffe, also generell um mit weichen Partikeln gefüllte Medien. Andererseits handelt es sich um mit sehr harten, also abrasiv wirkenden Partikeln gefüllte Klebstoffe auf Silikon- bzw. Epoxid-Basis, die beispielsweise zur Wärmeleitung, zur elektrischen Isolierung beziehungsweise zur optischen Beeinflussung von Licht eingesetzt werden können. Diese Dosierstoffe sind bisher nur schwierig dosierbar, wohingegen mit dem erfindungsgemäßen Dosierventil beste, d. h. sehr feingenaue Dosierergebnisse erzielt wurden. Von daher erzielt das erfindungsgemäße Dosierventil, obwohl mehr Elemente bzw. größere Bereiche des Dosierventils als beim Stand der Technik bewegt werden müssen, eine überraschende Wirkungsverbesserung.

Bevorzugt weist die Ventilkammer eine Düse mit der Austrittsöffnung auf. Dabei ist insbesondere bevorzugt das Verschlusselement so in der Ventilkammer angeordnet, dass die Austrittsöffnung bei Bewegung (insbesondere der Ventilkammer) in der Ausstoßrichtung auf das Verschlusselement zu bewegt wird, wobei durch das Verschlusselement Dosierstoff aus der Düse ausgestoßen wird, und dass die Austrittsöffnung bei einer Bewegung in der Rückzugsrichtung vom Verschlusselement weg bewegt wird. Die Austrittsöffnung kann bei Bewegung in Rückzugsrichtung wie oben erwähnt bis zum Verschlusselement bewegt werden, mithilfe dessen die Austrittsöffnung dann am Ende der Bewegung in dieser Richtung automatisch komplett geschlossen wird oder der Spalt zwischen Verschlusselement und Austrittsöffnung so klein ist, dass ein zähflüssiger Dosierstoff nicht mehr hindurchgelangen kann.

Die Aktoreinrichtung kann einen oder mehrere Aktoren umfassen. Dieser eine oder mehrere Aktoren sind bevorzugt mit der Ventilkammer bzw. deren die Austrittsöffnung bildenden Teile und der Ventilkammer-Lagerung gekoppelt.

Bei der Ventilkammer-Lagerung kann es sich beispielsweise um ein Ventilgehäuse, das heißt einen im wesentlichen geschlossenen Behälter, handeln, sie kann jedoch auch lediglich einen Rahmen umfassen, innerhalb dessen die Ventilkammer und die Aktoreinrichtung angeordnet sind.

Als Verschlusselement wird ein einstückiges oder mehrstückiges Element definiert, das bevorzugt eine längliche Form, beispielsweise eine zylindrische Form, aufweist, also beispielsweise ein Stößel, zum Beispiel hergestellt unter Verwendung von Silizium. Es kann jedoch auch ein rundes oder ovales Verschlusselement sein, das im Verschlusskanal bewegbar oder fest angeordnet bzw. gelagert ist. Das Verschlusselement kann in einem Verschlusskanal angeordnet sein, einem Hohlkörper, bevorzugt einem zylindrischen Hohlkörper, der an seiner Innenseite einen Hohlraum definiert, d.h. einschließt, innerhalb dessen das Verschlusselement mindestens bereichsweise so angeordnet ist, dass das Verschlusselement den Hohlraum verschließt.

Es ist im Zusammenhang mit der Erfindung zu beachten, dass die Verschlusswirkung auch komplex sein kann und nicht zwingend aus einem kompletten Abdichten des Hohlraums durch das Verschlusselement besteht: Bei dem erfindungsgemäßen Dosierventil kann es sich ja auch um ein offenes System handeln, was im Speziellen für die Dosierung der oben genannten scherverdünnenden bzw. thixotropen Dosierstoffe auch explizit bevorzugt wird.

Bei einem solchen offenen System ist das Zusammenwirken zwischen dem Verschlusselement und der Austrittsöffnung bzw. dem Verschlusskanal, der quasi eine Verlängerung der Austrittsöffnung in der Ventilkammer bildet und in diesem Fall mit der Austrittsöffnung mitbewegt wird, in einem besonderen Fokus: Zwischen dem Verschlusselement und der Austrittsöffnung bzw. dem Verschlusskanal soll mindestens bereichsweise ein ausreichend großer Durchlassspalt definiert werden, durch den der Dosierstoff hindurchgelangen kann. Dieser Durchlassspalt bildet einen Durchlasskanal für den Dosierstoff aus. Der Dosierstoff kann in einem ausreichend bewegten Zustand durch den Durchlasskanal fließen. In einem unbewegten Zustand hingegen oder in einem Bewegungsmodus bzw. Bewegungsmuster, in dem die Viskosität des Dosierstoffs nur geringfügig abgesenkt wird, verbleibt der Dosierstoff bevorzugt im durch den Durchlassspalt gebildeten Durchlasskanal, ohne weiter zu fließen. Dies bedeutet, dass die Dimensionierung des Durchlassspalts bzw. des Durchlasskanals so gewählt ist, dass unter den jeweils vorgegebenen Druckverhältnissen des Dosierstoffs im Dosierventil bei bestimmungsgemäßer Betriebstemperatur kein oder im Wesentlichen kein Durchfließen möglich ist, sobald der Dosierstoff nicht mehr oder eventuell nur gering in Bewegung ist. In diesem Sinne verschließen das Verschlusselement und der ihm zugeordnete Durchlasskanal gemeinsam gegen den Dosierstoff, der durch diesen Verschluss zurückgehalten wird. Im Endeffekt wird ein solcher Verschluss dadurch gebildet, dass eine zwar prinzipiell offene Anordnung bereitgestellt wird, durch die der Dosierstoff in einem ausreichend bewegten Zustand relativ ungehindert fließen kann, jedoch aufgrund der thixotropen bzw. scherverdünnenden Eigenschaften des Dosierstoffs automatisch dann verschließt, wenn die Bewegung des Verschlusskanals relativ zum Verschlusselements endet. Diese Relativbewegung wird u. a. durch die Bewegung der Austrittsöffnung bzw. des Verschlusskanals verursacht. In einem völligen Ruhezustand des Verschlusskanals relativ zum Verschlusselement findet daher kein Materialfluss statt. Ein komplettes Verschließen der Austrittsöffnung ist nicht notwendig, bevorzugt ist die Austrittsöffnung daher immer offen gehalten. Eine ganz gezielte Abgabe von Dosierstoff kann darüber hinaus durch die unterschiedlichen Bewegungsmodi genau kontrolliert werden, wie später noch erläutert wird.

Ein erfindungsgemäßes Dosierverfahren ist analog zum erfindungsgemäßen Dosierventil ausgebildet: Es handelt sich also hierbei um ein Dosierverfahren für einen Dosierstoff mittels eines Dosierventils, welches eine Austrittsöffnung und ein in oder an der Ventilkammer angeordnetes Verschlusselement aufweist, wobei die Austrittsöffnung bzw. zumindest Teile oder Bereiche der Ventilkammer, welche die Austrittsöffnung umfassen, bevorzugt die Ventilkammer insgesamt, gegenüber einer Ventilkammer-Lagerung im Betrieb in einer Ausstoß- und/oder Rückzugsrichtung bewegt wird, so dass in zumindest einem Bewegungsmodus bei einer Bewegung der Austrittsöffnung in die Ausstoßrichtung zur Dosierung bzw. dosierten Abgabe eine bestimmte Menge Dosierstoff vom Stößel durch die Austrittsöffnung gestoßen wird. Dabei wird die Austrittsöffnung bevorzugt mittels einer Aktoreinrichtung gegenüber der Ventilkammer-Lagerung bewegt.

Weitere besonders vorteilhafte Ausgestaltungen und Weiterbildungen der Erfindung ergeben sich auch aus den abhängigen Ansprüchen sowie der nachfolgenden Beschreibung. Dabei kann das Dosierverfahren auch entsprechend den abhängigen Ansprüchen zum Dosierventil und gemäß den Ausführungen in der folgenden Beschreibung weitergebildet sein und umgekehrt. Dabei können auch Merkmale aus verschiedenen Ausführungsbeispielen beliebig kombiniert werden, um zu neuen Ausführungsbeispielen im Rahmen der Erfindung zu gelangen.

Bevorzugt liegen die Ausstoßrichtung und die Rückzugsrichtung der Austrittsöffnung im Wesentlichen entlang, d. h. parallel oder bevorzugt koaxial zu, einer Wirkrichtungsachse der Aktoreinrichtung.

Unter der Wirkrichtungsachse eines Aktors bzw. einer Aktoreinrichtung ist die (gedachte) Achse zu verstehen, entlang deren der Aktor bzw. die Aktoreinrichtung als Gesamtheit seine bzw. ihre wesentliche Ausdehnungsrichtung aufweist und in der er bzw. sie den gewünschten Druck bzw. seine bzw. ihre Wirkung als Kraft ausübendes Element ausüben kann. Eine parallele und insbesondere eine koaxiale Ausrichtung der Wirkrichtungsachse der Aktoreinrichtung und der Ausstoß- bzw. Rückzugsrichtung der Austrittsöffnung bewirkt, dass insbesondere sehr geringe Wirkverluste, d. h. Kraftverluste, bei der Bewegung der Austrittsöffnung zu verzeichnen sind. Dies erhöht einerseits die Präzision und andererseits die mögliche Geschwindigkeit der Austrittsöffnung und so insgesamt die Effektivität des Dosierventils.

Besonders bevorzugt ist es außerdem, dass die Wirkrichtungsachsen mehrerer Aktoren der Aktoreinrichtung zu einer Wirkrichtungsachse zusammen fallen, d.h. dementsprechend angeordnet und ausgerichtet sind. Hierzu können ein erster Aktor und ein zweiter Aktor beispielsweise entlang der Wirkrichtungsachse hintereinander angeordnet sein. Besonders bevorzugt verläuft dann die Ausstoß- bzw. Rückzugsrichtung der Austrittsöffnung entlang dieser gemeinsamen Wirkrichtungsachse der Aktoren der Aktoreinrichtung. Allgemeiner kann davon die Rede sein, dass mehrere Aktoren einer Aktoreinrichtung so angeordnet werden, dass sie parallel oder koaxial zueinander wirken. Auch diese Maßnahme bewirkt eine optimierte Kraftübertragung, bei der die durch die Aktoren einer Aktoreinrichtung in einem Moment ausgeübten Kräfte im Wesentlichen aufaddiert werden können. Außerdem erhöht diese Maßnahme die Laufruhe des Dosierventils, weil keine störenden Querkräfte quer zur prinzipiellen Wirkrichtungsachse einer Aktoreinrichtung kompensiert werden müssen.

Ein solches Zusammenwirken zweier sozusagen in Reihe angeordneter Aktoren kann beispielsweise dazu dienen, die Verschluss- bzw. Öffnungswirkung der Austrittsöffnung, d. h. den Hub, zu erhöhen. Die Ausstoß- bzw. Rückzugsrichtung der Austrittsöffnung kann dabei, z. B. bei einer ringförmigen Ausbildung von piezoelektrischen Aktoren (mehr hierzu siehe weiter unten), koaxial zur Wirkrichtungsachse solcher piezoelektrischen Aktoren liegen, bzw. bei anders ausgebildeten Aktoren auch parallel zur Wirkrichtungsachse. Die parallele und/oder koaxiale Ausrichtung der Wirkrichtungsachsen der Aktoren und der Ausstoß- bzw. Rückzugsrichtung der Austrittsöffnung bewirkt, dass insbesondere sehr geringe Wirk-, d. h. Kraft-Verluste bei der Bewegung der Austrittsöffnung zu verzeichnen sind. Dies erhöht einerseits die Präzision und andererseits die Geschwindigkeit der Austrittsöffnung und so insgesamt die Effektivität des Dosierventils.

Das Zusammenwirken der beiden Aktoren kann andererseits - und dies ist besonders bevorzugt - dem Prinzip dienen, dass der erste Aktor die Austrittsöffnung in eine erste Richtung, nämlich in die Ausstoßrichtung bewegt und der zweite Aktor in eine zweite, gegenläufige Richtung, nämlich die Rückzugsrichtung (oder umgekehrt). Der erste und zweite Aktor sind also in ihrer Bewegung gegenläufig ausgerichtet und bevorzugt gegengleich geschaltet. Dies ist im Rahmen der Erfindung grundsätzlich auch mit Aktoren jedweder Art zu realisieren, besonders bevorzugt, da besonders einfach, jedoch mit piezoelektrischen Aktoren, wie unten weiter ausgeführt wird.

Prinzipiell ist es möglich, dass sowohl das Verschlusselement als auch die Austrittsöffnung beide im Betrieb des Dosierventils bewegbar angeordnet sind. Durch eine solche Maßnahme könnte beispielsweise in einem Betriebszustand das Verschlusselement in Ausströmrichtung des Dosierstoffs und die Austrittsöffnung in die Gegenrichtung bewegt werden, um eine erhöhte Relativgeschwindigkeit der beiden genannten Elemente aufeinander zu zu erreichen. In diesem Falle kann nämlich (im Wesentlichen) der Betrag der Geschwindigkeit des Verschlusselements zu dem Betrag der Geschwindigkeit der Austrittsöffnung addiert werden, so dass man hierdurch zur relativen Geschwindigkeit aufeinander zu gelangt. In einem anderen Betriebszustand werden die beiden genannten Elemente dann voneinander weg bewegt, also das Verschlusselement gegen die Ausströmrichtung des Dosierstoffs und die Austrittsöffnung mit der Ausströmrichtung. Eine solche Maßnahme kann also einen schnelleren Verschluss bzw. ein schnelleres Öffnen des Dosierventils ermöglichen.

Das Verschlusselement kann außerdem auch aus anderen Gründen bewegbar im Dosierventil angeordnet sein: So kann das Verschlusselement beispielsweise auch nur (oder speziell) dann bewegt werden, wenn sich die Austrittsöffnung in einer Extremposition befindet. Insbesondere, wenn die Austrittsöffnung vollständig in Richtung des Inneren des Dosierventils bewegt ist, kann das Verschlusselement so noch weiter in Richtung der Austrittsöffnung bewegt werden, dass er die Austrittsöffnung vollständig mechanisch verschließt. Dadurch kann auch bei einem offenen System, wie oben beschrieben, eine vollständige mechanische Verschlusswirkung erzielt werden. Hierdurch kann erreicht werden, dass der Dosierstoff aufgrund des mechanischen Verschlusses vor Alterung im Speziellen durch die Umgebungsluft (etwa durch Verdunstung) geschützt wird, und/oder, dass hierdurch eine (insbesondere Erst-)Befüllung bzw. auch eine Reinigung des Dosierventils erleichtert wird.

Allgemein kann ein bewegbares Verschlusselement beispielsweise zwischen fest definierten Anschlägen hin- und herbewegbar angeordnet sein, so dass sich ein definierter maximaler Hub des Verschlusselements ergibt. Eine (Anschlags-)Position des Verschlusselements kann dabei beispielsweise durch eine Spannfeder im spannungslosen Zustand erzielt werden. Möglich ist auch, das Verschlusselement (möglichst kontrolliert) in verschiedene Zwischenpositionen zu bewegen, beispielsweise mithilfe einer Spindel. Zum Antrieb des Verschlusselements können sowohl elektrisch angetriebene (Spindel-) Systeme als auch Hubmagnete als auch pneumatische und/oder hydraulische Kolben verwendet werden. Auch eine Einstellung der Position des Verschlusselements von Hand, etwa durch Einschrauben des Verschlusselements, ist möglich. Eine solche Positionseinstellung kann dabei auch dazu dienen, das Dosierventil, insbesondere seine Durchlässe in Richtung des Austrittsöffnung, an den jeweiligen Dosierstoff, also insbesondere an dessen Viskosität, anzupassen.

Bevorzugt ist, dass das Verschlusselement feststehend an der Ventilkammer-Lagerung fixiert ist. Die Fixierung an der Ventilkammer-Lagerung kann dabei direkt erfolgen, was bedeutet, dass das Verschlusselement mit der Ventilkammer-Lagerung direkt verbunden ist, oder indirekt, das heißt, dass zwischen der Ventilkammer-Lagerung und dem Verschlusselement ein oder mehrere Verbindungselemente angebracht sind, über die die Fixierung zwischen dem Verschlusselement und der Ventilkammer-Lagerung erfolgt. Durch diese Verbindung bzw. Fixierung des Verschlusselements an der Ventilkammer-Lagerung ist gewährleistet, dass sich das Verschlusselement im Gegensatz zum Stand der Technik eben gerade nicht bewegen kann, was bedeutet, dass die Ausstoß- bzw. Rückzugsbewegung des Dosierventils einzig und allein durch die Bewegung der Austrittsöffnung erfolgt.

Ein derartiger Aufbau mit fixiertem Verschlusselement bietet unter anderem den Vorteil, dass (im Vergleich mit einem Dosierventil mit bewegbarer Austrittsöffnung und bewegbarem Verschlusselement) der Aufbau des Dosierventils vergleichsweise einfach gehalten werden kann. Dadurch wird auch der Betrieb des Dosierventils unkomplizierter und leichter steuer- bzw. regelbar.

Bevorzugt weist die Ventilkammer-Lagerung ein Ventilgehäuse auf, d.h. sie umfasst ein Ventilgehäuse oder ist bevorzugt als Ventilgehäuse ausgebildet. In einem solchen Ventilgehäuse kann die Ventilkammer ausgebildet, insbesondere gelagert sein. Das Ventilgehäuse schließt die Ventilkammer im Wesentlichen dicht vom Äußeren des Dosierventils ab, so dass keine äußeren Störeinflüsse, beispielsweise durch Verunreinigungen, unkontrolliert eintretende Gase etc. den Betrieb der Ventilkammer beeinflussen können. Hierdurch sind eine besonders hohe Laufruhe und eine geringe Störanfälligkeit des Dosierventils möglich.

Alternativ kann die Ventilkammer-Lagerung auch ein einfaches Gestell umfassen, in dem die Ventilkammer angeordnet ist. Dies bedeutet insbesondere, dass die Ventilkammer dann nicht hermetisch vom Äußeren abgeschottet ist, was beispielsweise Vorteile beim Zugriff auf bewegliche Elemente des Dosierventils bzw. auch bei der optischen Kontrolle des Betriebs des Dosierventils hat.

Wie bereits erwähnt, weist die Aktoreinrichtung gemäß einer besonders bevorzugten Ausführungsform der Erfindung mindestens einen ersten piezoelektrischen Aktor auf. Dies bedeutet, dass zumindest ein Aktor bzw. eine Aktoreinrichtung auf dem piezoelektrischen Prinzip basiert. Bevorzugt weisen mehrere, besonders bevorzugt alle Aktoren der Aktoreinrichtung piezoelektrische Aktoren auf. Hierdurch ist es dann möglich, dass auf Basis eines einzigen Wirkprinzips, nämlich des piezoelektrischen, die Bewegung der Austrittsöffnung gesteuert wird, ohne dass weitere Aktoren notwendig wären, die auf anderen mechanischen bzw. elektrischen Anregungsprinzipien basieren. Insbesondere ist dadurch die Steuerung bzw. Regelung der Aktoreinrichtung besonders einfach und effektiv.

Allgemein gesprochen haben piezoelektrische Aktoren gegenüber anderen mechanischen, elektromechanischen bzw. pneumatischen/hydraulischen Systemen den Vorteil der sehr präzisen und schnelleren Steuerbarkeit, insbesondere einer kurzen Reaktionszeit. Außerdem benötigen sie relativ wenig Bauraum. Als piezoelektrischer Aktor wird im Zusammenhang der Erfindung ein solches Bauteil definiert, das zwar aus mehreren Elementen, beispielsweise mehreren übereinander geschichteten oder parallel nebeneinander liegenden Piezokristallen bzw. Kristallschichten oder ähnlichen Piezoelementen, ausgebildet sein kann, jedoch einen Verbund bildet, der als Gesamtheit von einer Steuereinheit angesteuert wird, das heißt z. B. einen gemeinsamen elektrischen Anschluss zur Ansteuerung seiner enthaltenen Einzelelemente aufweist.

Dabei können die Piezoelemente eines Aktors jeweils wie in einer Reihenschaltung wirken, d. h. dass sich beispielsweise die Ausdehnung der Piezoelemente aufaddiert, oder parallel zueinander, d. h. dass z. B. die Piezoelemente so nebeneinander geschaltet sind, dass sich beispielsweise die wirksame Druckfläche erhöht. Auch bei mehreren parallelen Aktorelementen können diese jeweils wiederum als Stapel von in Reihe geschalteten Piezoelementen (sogenannten Piezo-Stacks) aufgebaut sein.

Eine bevorzugte Weiterbildung dieser Ausführungsform beinhaltet, dass die Aktoreinrichtung mindestens zwei piezoelektrischen Aktoren aufweist. Wie angedeutet, können die beiden miteinander wirkenden piezoelektrischen Aktoren dazu verwendet werden, den Hub in Ausstoß- bzw. Rückzugsrichtung zu erhöhen, nämlich (bei baugleichen Aktoren) im Wesentlichen zu verdoppeln. Besonders bevorzugt ist das Dosierventil jedoch so ausgebildet, dass der erste piezoelektrische Aktor, wenn er im Betrieb expandiert wird, die Austrittsöffnung im Betrieb in die Rückzugsrichtung bewegt, während der zweite piezoelektrische Aktor die Austrittsöffnung in die Ausstoßrichtung bewegt oder umgekehrt. Die piezoelektrischen Aktoren sind also so mit der Ventilkammer-Lagerung und der Austrittsöffnung gekoppelt und entsprechend in ihrer Wirkrichtung ausgerichtet, dass entsprechende gegenläufige Bewegungen der Austrittsöffnung in diese beiden Richtungen ermöglicht werden. Dabei liegen die Wirkrichtungsachsen, d. h. die (gedachten) Achsen, entlang deren die Aktoren jeweils ihre wesentliche Ausdehnungsrichtung aufweisen und in der sie ihren Druck ausüben bzw. ihre Wirkung als Druckelemente ausüben können, im Wesentlichen in der Ausstoß- und/oder Rückzugsrichtung der Austrittsöffnung.

Mit anderen Worten sind die beiden piezoelektrischen Aktoren gegenläufig geschaltet, wobei eine Push-Push-Anordnung realisiert wird, bei der jeweils einer der piezoelektrischen Aktoren die Austrittsöffnung bzw. die entsprechenden Teile eines Ventilkammerelements direkt oder indirekt (beispielsweise über einen anderen Mechanismus) schiebt. D. h. während sich ein erster der Aktoren ausdehnt und die Austrittsöffnung in eine Richtung schiebt, zieht sich der zweite Aktor zusammen und gibt so den notwendigen Platz für die Bewegung der Austrittsöffnung in die gewünschte Richtung frei. Soll die Austrittsöffnung dann in die andere Richtung bewegt werden, werden die Funktionen der Aktoren umgedreht, d. h. der zweite Aktor dehnt sich wieder aus und schiebt nun die Austrittsöffnung, während sich der erste Aktor zusammenzieht und den Weg freigibt. Dies ist vorteilhaft, um ein besonders stabiles Aktorsystem bereitzustellen. Dies gilt insbesondere für piezoelektrische Aktoren, da Piezoelemente zwar in der Regel auf Druck gut belastbar sind, eine Belastung auf Zug dagegen schnell zu einer Schädigung oder völligen Zerstörung der Piezoelemente führen kann. Dabei kann besonders bevorzugt die Dimensionierung, Anordnung und Ansteuerung der Aktoren so erfolgen, dass der sich zusammenziehende Aktor immer noch einen (geringen) Gegendruck ausübt und somit für eine gewisse Vorspannung des sich ausdehnenden piezoelektrischen Aktors sorgt, damit dieser am Ende der Bewegung nicht zu stark überschwingt und innere Spannungen vermieden bzw. minimiert werden, die zu einer Schädigung der Piezoelemente führen könnten. Dies erlaubt eine besonders schnelle Bewegung der Austrittsöffnung mit einer hohen Frequenz und sehr steilen Flanken. Zudem kann dafür gesorgt werden, dass die beiden piezoelektrischen Aktoren in ihrer Kombination immer die gleiche Gesamtlänge entlang ihrer Wirkrichtungsachse aufweisen und sich gegenseitig in ihrer Ausdehnung ausgleichen. D. h. es ist bevorzugt, dass der erste piezoelektrische Aktor im Betrieb durch seine Bewegung die Bewegung des zweiten piezoelektrischen Aktors ausgleicht und der zweite piezoelektrisehe Aktor im Betrieb durch seine Bewegung die Bewegung des ersten piezoelektrischen Aktors ausgleicht. So können auch die mechanischen Belastungen auf den (insbesondere äußeren) Gesamtaufbau des Dosierventils so gering wie möglich gehalten werden. Kräfte, die nach außen wirken, treten, abgesehen von Trägheitskräften, so gut wie überhaupt nicht auf.

Gemäß einer Ausführungsform kann mindestens einer der piezoelektrischen Aktoren zylinderförmig, bevorzugt rohrförmig, ausgebildet sein. Er kann dadurch besonders gleichmäßig ausgebildet werden und weist einen besonders vorteilhaften Querschnitt auf: Er kann nämlich besonders einfach in eine z.B. von der Ventilkammer-Lagerung, insbesondere einem Ventilgehäuse, eingeschlossene Aktorenkammer eingefügt werden, da zylinderförmige Querschnitte von Aktorenkammern im Vergleich etwa zu eckigen Kammern besonders einfach herzustellen und bereitzustellen sind.

Es ist jedoch auch möglich, mindestens einen der piezoelektrischen Aktoren nicht zylinderförmig, beispielsweise eckig, auszubilden. Auch eine Kombination aus einem ersten, zylindrischen, piezoelektrischen Aktor und einem zweiten, nicht-zylindrischen, Aktor ist möglich. (Recht-)eckige Aktoren haben den Vorteil der einfacheren Herstellbarkeit und daher auch der günstigeren Beziehbarkeit. Bei einer Kombination von zylindrischem und nichtzylindrischem Aktor kann daher einerseits der Vorteil eines zylindrischen, insbesondere rohrförmigen, Aktors, nämlich u.a. die einfache Verbindbarkeit mit der Austrittsöffnung, erreicht werden. Andererseits können in einem gewissen Rahmen auch Kosten und Aufwand durch die Verwendung von nichtzylindrischen Aktoren eingespart werden.

In vielen Anwendungsfällen ist es bevorzugt, dass beide (piezoelektrischen) Aktoren baugleich ausgebildet sind. Dies erspart nicht nur Aufwände bei der Abstimmung der beiden Aktoren aufeinander, sondern auch bei der Ausgestaltung einer Aktorenkammer und entsprechend bei der Abstimmung der Bewegungsprozesse.

Vorteilhafterweise ist ein die Austrittsöffnung bewegendes Element, vorzugsweise die Ventilkammer als solche, dabei fest zwischen dem ersten und zweiten (piezoelektrischen) Aktor eingeklemmt. Hieraus ergibt sich eine effektive Kraftkopplung zwischen den Aktoren und der Ventilkammer, was Reibungs- und Kraftübertragungs-Verluste erheblich mindert und daher wiederum der Effektivitätssteigerung des gesamten Dosierventils zugute kommt.

Wie bereits angedeutet, ist vorteilhafterweise mindestens einer der beiden (piezoelektrischen) Aktoren in einer Aktorenkammer der Ventilkammer-Lagerung bzw. des Ventilgehäuses angeordnet. Besondere Vorteile ergeben sich dann, wenn beide Aktoren in einer gemeinsamen Aktorenkammer angeordnet sind. Hierdurch ist es möglich, dass das Zusammenwirken der beiden Aktoren optimiert, insbesondere optimal abgestimmt ist und keine Wirkverluste auftreten. Beispielsweise kann so erreicht werden, dass der erste Aktor und der zweite Aktor in ihren Bewegungen in der Ausstoß- und/oder Rückzugsrichtung innerhalb der Aktorenkammer auf ein definiertes maximales Gesamtmaß begrenzt sind. Ein solches maximales Gesamtmaß kann alleine durch die Innenabmessungen der Aktorenkammer definiert sein, es können jedoch zusätzlich auch noch Abstandshalter innerhalb der Aktorenkammer angeordnet sein, die die Innenabmessungen der Aktorenkammer so reduzieren, dass das definierte maximale Gesamtmaß genau erreicht wird. Durch solche Abstandshalter kann das Gesamtmaß auch definiert variiert werden, beispielsweise dadurch, dass die Position eines solchen Abstandshalters mittels Schrauben oder ähnlichen Verstellelementen von außerhalb der Aktorenkammer fein eingestellt werden kann.

Die Aktoreinrichtung kann sich insbesondere zwischen einer Lageranordnung einer Ventilkammer und einer Widerlageranordnung der Ventilkammer-Lagerung, insbesondere des Ventilgehäuses, erstrecken. Auf diese Weise wird zwischen der Ventilkammer-Lagerung bzw. seiner Widerlageranordnung und der Ventilkammer bzw. ihrer Lageranordnung durch die Aktoreinrichtung eine Kraft zur Bewegung der Ventilkammer in die Ausstoßrichtung bzw. in die Rückzugsrichtung ausgeübt.

Wie oben erwähnt, ist es grundsätzlich möglich, das Verschlusselement beispielsweise tropfenförmig, kugelförmig, elliptisch, unregelmäßig oder ein- oder zweiseitig konisch auszubilden. Es ist jedoch besonders bevorzugt, dass das Dosierventil ein solches Verschlusselement aufweist, das durch eine längliche Ausdehnung eine Wirkrichtung des Verschlusselements definiert. Bevorzugt umfasst es dabei einen länglichen Stößel. Ein solcher Stößel ist im Wesentlichen zylinderförmig aufgebaut, wobei er (wie im Übrigen auch jedes andere Verschlusselement) an seiner Außenoberfläche auch bereichsweise Ausbuchtungen beziehungsweise Einbuchtungen aufweisen kann, die beispielsweise auch als durchgehende Löcher ausgebildet sein können. Solche Aus- bzw. Einbuchtungen können insbesondere dazu dienen, das Verschlusselement mit Angriffselementen anderer mechanischer Vorrichtungen zu verbinden. Über diese Angriffspunkte kann ein Kraft- oder Formschluss mit solchen Vorrichtungen zur gezielten Bewegung und/oder Fixierung des Verschlusselements erzielt werden.

Insbesondere kann das Verschlusselement zumindest teilweise in einem durch eine Form mindestens eines piezoelektrischen Aktors gebildeten Hohlraum angeordnet sein, wobei es dann beispielsweise auch möglich ist, dass auch der zweite (beispielsweise auch piezoelektrische) Aktor hohl ist. Eine solche Anordnung des Verschlusselements in einem Bereich des Hohlraums mindestens eines piezoelektrischen Aktors ist besonders platzsparend.

Als besonders vorteilhaft hat es sich erwiesen, das Dosierventil so zu gestalten, dass die Ventilkammer zumindest teilweise von einer Gruppe von mehreren, vorzugsweise mindestens drei, parallel angeordneten und parallel wirkenden (vorzugsweise piezoelektrischen) Aktorelementen eines Aktors umgeben ist. Ein Aktor umfasst also mehrere Aktorelemente, die gemeinsam die notwendigen Kräfte für die Bewegung der Ventilkammer und damit der Austrittsöffnung in eine bestimmte Richtung aufbringen. Mit anderen Worten: Der Aktor ist nicht einstückig ausgebildet, sondern umfasst mehrere Teil-Aktoren bzw. Aktorelemente, die räumlich voneinander getrennt sind und an mehreren Stellen um die Ventilkammer herum angeordnet sind. Die durch die Aktorelemente aufgebrachten Kräfte des Aktors addieren sich dabei im Wesentlichen zu einer gemeinsamen Kraft, der Gesamtkraft des Aktors.

Bevorzugt wird hierbei, dass die Ventilkammer zumindest teilweise mit zwei Gruppen von (wiederum bevorzugt piezoelektrischen) Aktorelementen bestückt ist, wobei Aktorelemente einer ersten Gruppe zu einem ersten Aktor zusammengeschaltet sind und Aktorelemente einer zweiten Gruppe zu einem zweiten Aktor zusammengeschaltet sind. Dabei übt jeder der beiden Aktoren besonders bevorzugt im Betrieb eine Kraft in eine bestimmte Richtung aus, wobei vorteilhafterweise der erste Aktor eine Kraft in die Ausstoßrichtung und der zweite Aktor eine Kraft in die Gegenrichtung, also die Rückzugsrichtung, oder genau umgekehrt ausüben, so dass sich ein System aus Aktor und Gegenaktor ergibt. Im Endeffekt ergibt sich hierdurch die oben bereits genannte Push-Push-Anordnung der beiden Gruppen von Aktorelementen, d. h. der beiden Aktoren.

Die Aktorelemente eines aus mehreren Aktorelementen gebildeten Aktors verlaufen bevorzugt parallel zu einer Bewegungsrichtungsachse der Austrittsöffnung bzw. der Ventilkammer und sind bezüglich einer senkrecht zur Bewegungsrichtungsachse angeordneten Schnittebene gleichmäßig, z. B. rotationssymmetrisch, verteilt um die Ventilkammer angeordnet. Die Bewegungsrichtungsachse eines solchen Aktors ist bevorzugt die Längsachse des Dosierventils. Eine gleichmäßige Verteilung der Aktorelemente kann beispielsweise durch eine in Bezug zu einer Mittelachse der Ventilkammer sternförmige und/oder anderweitig radial senkrechte Anordnung realisiert sein. Die gleichmäßige Verteilung - beispielsweise eine Anordnung von zwei Aktorelementen gegenüber voneinander oder eine Anordnung von drei Aktorelementen versetzt im Winkel von 120° zueinander um die Mittelachse der Ventilkammer - bewirkt unter anderem eine gleichmäßige Kraftverteilung der durch die Aktorelemente ausgeübten Kräfte und somit eine hohe Stabilität und Laufruhe des Dosierventils.

Die Ventilkammer kann ein- oder mehrteilig ausgebildet sein. Bevorzugt ist, dass die Ventilkammer mindestens zweiteilig ausgebildet ist, mit einem bezüglich einer Bewegungsrichtungsachse der Ventilkammer im Bereich der Austrittsöffnung angeordneten Ventilkammerkopf und einem Ventilkammergrundkörper. Am Ventilkammergrundkörper können beispielsweise die Lagerflächen für die Aktoreinrichtung angeordnet sein, während der Ventilkammerkopf beispielsweise mit einer Düse des Dosierventils zusammenwirken kann, in der die Austrittsöffnung angeordnet ist. Insbesondere kann eine solche Ausgestaltung so realisiert sein, dass nur der Ventilkammerkopf, ggf. auch nur Teilbereiche davon, mit dem Dosierstoff in Berührung kommen, das heißt, dass nur in diesem Bereich der Dosierstoff fließt, während der Ventilkammergrundkörper, etwa mit Hilfe von Dichtungen, von dem Dosierstoff abgeschottet sein kann. Hierdurch lässt sich insbesondere die Aktoreinrichtung von der Fluidik, d. h. dem Bereich, in dem der Dosierstoff fließt, räumlich, funktional und physisch trennen, so dass der Dosierstoff den Betrieb der Aktoreinrichtung nicht stören kann.

Eine weitere vorteilhafte Weiterbildung der Erfindung besteht darin, dass an der Ventilkammer (insbesondere außenseitig an der Ventilkammer) zumindest eine Auflagerfläche, z. B. an einem Auflagerbock bzw. einer Auflagernase, angeordnet ist, und sich ein Aktor zwischen der Auflagerfläche der Ventilkammer und einer Widerlagerfläche der Ventilkammer-Lagerung (insbesondere eines Ventilgehäuses) erstreckt. Der Aktor stützt sich damit endseitig an der Auflagerfläche und der Widerlagerfläche ab.

Außerdem kann eine Widerlagerfläche der Ventilkammer-Lagerung an einer Widerlagermasse angeordnet sein, welche bevorzugt federnd - etwa an einem feststehenden Teil der Ventilkammer-Lagerung, z.B. an einem Ventilgehäuse - gelagert ist. Eine solche federnde Lagerung kann beispielsweise als eine in einem Ventilgehäuse angeordnete Tellerfeder realisiert sein. Durch die federnde Lagerung wird eine Vorspannung auf den jeweiligen Aktor bzw. das jeweilige Aktorelement ausgeübt, wodurch beispielsweise piezoelektrische Aktoren bzw. Aktorelemente erheblich weniger beansprucht werden. So können sich im Speziellen piezoelektrische Aktorelemente sofort beim Anschalten ausdehnen, etwa um in eine Ausgangslage zu kommen. Die dabei auftretenden Kräfte werden durch die gefederte Widerlagermasse effektiv aufgefangen. Besonders bevorzugt ist die Masse der Widerlagermasse erheblich größer - d.h. mindestens doppelt, bevorzugt vierfach größer - als die Masse der Ventilkammer.

Gemäß einer vorteilhaften Weiterbildung des erfindungsgemäßen Dosierventils weist die Ventilkammer außerdem eine, bevorzugt zwei, Öffnungen, beispielsweise Bohrungen, für einen Dosierstoff auf. Diese Öffnung(en) dient bzw. dienen dazu, den Dosierstoff in das Innere der Ventilkammer zu leiten, von wo aus er weiter in Richtung der Austrittsöffnung geleitet wird. Der Bereich der Öffnungen in der Ventilkammer definiert also damit auch den "fluidischen Bereich" der Ventilkammer, der, wie oben erwähnt, beispielsweise über Dichtungen, etwa Ringdichtungen, vom Aktorbereich des Dosierventils bzw. der Ventilkammer getrennt sein kann. Die Ausbildung der Ventilkammer mit zwei Öffnungen kann beispielsweise dazu verwendet werden, zwei Komponenten eines Dosierstoffs separat in die Ventilkammer zu leiten und erst dort zu vermischen oder, und dies ist insbesondere bevorzugt, eine Kreislaufführung des Dosierstoffs innerhalb der Ventilkammer zu realisieren. Eine solche Kreislaufführung ist insbesondere bei den oben erwähnten besonders zähflüssigen, vor allem den thixotropen bzw. scherverdünnenden Dosierstoffen von Vorteil, da hierdurch der Dosierstoff ggf. innerhalb der Ventilkammer in Bewegung gehalten werden kann. Die zwei Öffnungen werden besonders bevorzugt nicht zentral in die Ventilkammer geleitet, d. h. nicht direkt in Richtung des Mittelpunkts, sondern führen von der Außenseite der Ventilkammer so in ihr Inneres, dass sie gemäß ihrer prinzipiellen Verlaufsrichtung den Mittelpunkt umgehen. Eine solche "schräge" Führung der Öffnungen hat insbesondere den Vorteil, dass der Dosierstoff hierdurch praktisch automatisch definierter verwirbelt und damit in Bewegung gehalten werden kann.

Ein erfindungsgemäßes Dosierventil kann zusätzlich auch eine Dosierstoffvorratskammer aufweisen, die über eine Leitung mit der Ventilkammer verbunden ist. Über diese Leitung und insbesondere Öffnungen der Ventilkammer ist die Dosierstoffvorratskammer mit dem Ventilkammer-Inneren fluidisch verbunden. Die Dosierstoffvorratskammer kann auch als (ggf. temporär) vom Dosierventil getrenntes Funktionselement ausgebildet sein, das im Betrieb mit dem Dosierventil über die Leitung oder durch temporäres Verbinden (etwa an einer mechanischen Haltevorrichtung) verbunden wird.

Die Düse des Dosierventils ist bevorzugt auswechselbar, um die Dosierung unterschiedlicher Dosierstoffe, beispielsweise mit unterschiedlichen Viskositäten bzw. anderen Materialeigenschaften zu ermöglichen und zudem eine einfachere Wartbarkeit zu gewährleisten. Hierzu kann die Düse von einer Düsenkappe sandwichartig außenseitig am Dosierventil gehalten und mit diesem verbunden werden. Ein Abnehmen der Düsenkappe kann dann die Düse freigeben und einen einfachen Austausch ermöglichen.

Weitere Vorteile ergeben sich durch die Ausstattung einer Düse des Dosierventils mit einer Heizvorrichtung, mithilfe derer gewährleistet werden kann, dass die Düse eine Temperatur aufweist, die insbesondere die Einstellung der Viskosität des Dosierstoffs unterstützt. Eine solche Heizvorrichtung ist gemäß einer besonders bevorzugten Ausführungsform an der Düse an- bzw. von dieser abkoppelbar. Dies wird durch eine non-permanent ausgebildete Verbindung zwischen Heizvorrichtung und Düse, beispielsweise eine Klemmverbindung, realisiert. Insbesondere kann dadurch erreicht werden, dass Wartungsarbeiten an der Düse vereinfacht werden, beispielsweise eine Auswechslung der Düse oder von Teilen der Düse.

Während es oftmals von Vorteil sein kann, eine Düse des Dosierventils mit einer Heizvorrichtung zu beheizen, können sich im Inneren des Dosierventils, d.h. im Ventilgehäuse bzw. in der Ventilkammer beim Betrieb der Aktoreinrichtung hohe Temperaturen entwickeln. Daher wird bevorzugt, dass ein solches Ventilgehäuse und/oder die Ventilkammer mindestens einen Kühlungskanal aufweist, um im Betrieb ein Kühlmedium zur Kühlung der Aktoreinrichtung hindurch zu leiten. Grundsätzlich können hierzu sowohl flüssige als auch gasförmige Kühlmedien verwendet werden und der Kühlungskanal in seinen mechanischen und chemischen Eigenschaften entsprechend den technischen Anforderungen dieses Kühlmediums ausgebildet werden. Bevorzugt ist die Durchleitung von Luft, insbesondere Druckluft, wobei letztere durch höhere Strömungsgeschwindigkeiten einen schnelleren Abtransport von Wärme ermöglicht. Luft hat insbesondere den Vorteil, dass sie die Aktoren der Aktoreinrichtung geringstmöglich in ihrem Betrieb stört, etwa durch Ablagerungen oder durch chemische Störeinflüsse. Der Kühlkanal ist bevorzugterweise so angeordnet und ausgebildet, dass die Aktoren der Aktoreinrichtung von dem Kühlmedium umströmt werden können. Der Kühlkanal wird über einen entsprechenden Außenanschluss des Dosierventils mit dem Kühlmedium gespeist. Auch hier ist es bevorzugt, eine Kreislaufführung des Kühlmediums zu realisieren, wozu wiederum zwei Anschlüsse, ein Zuleitungs-Anschluss und ein Ableitungs-Anschluss, für das Kühlmedium verwendet werden können.

Ein weiteres kritisches Moment stellt die Verbindung der Aktoren der Aktoreinrichtung mit Auf- bzw. Widerlagerflächen innerhalb des Dosierventils dar. Dabei gilt, dass eine großflächigere endseitige Verbindung zwischen einem Aktor(element) und einer Lagerfläche einer geringerflächigeren Verbindung vorzuziehen ist, um Spannungen entlang dieses Verbindungsbereichs zu reduzieren. Eine besonders effektive Lösung für dieses Problem wurde dadurch realisiert, dass die Aktoren endseitig (also stirnseitig) mit Auflagerflächen und/oder Widerlagerflächen über eine Ausgleichsmasse, vorzugsweise Klebstoff, verbunden sind. Die Ausgleichsmasse bzw. der Klebstoff erhöht die Kontaktfläche zwischen dem Aktor(element) und der Auf- bzw. Widerlagerfläche. Falls eine Demontage erforderlich ist, etwa zu Reparatur- oder Wartungszwecken, kann zum Lösen des Klebstoff beispielsweise eine Druckkraft aufgebracht werden, indem über eine Öffnung (vorzugsweise ein Gewindeloch) an den Auf- bzw. Widerlagern mit einem Bolzen oder einer Schraube gegen den Aktor gedrückt wird. Alternativ zur Verwendung einer Ausgleichsmasse, insbesondere einer Verklebung, können die Aktoren endseitig auch über ballige Punktauflagen mit Auf- bzw. Widerlagerflächen verbunden sein, um Biegekräfte zu vermeiden.

Das erfindungsgemäße Dosierverfahren wird bevorzugt dadurch weitergebildet, dass die Aktoreinrichtung, welche einen ersten Aktor und/oder einen zweiten Aktor aufweist, die jeweils mindestens ein piezoelektrisches Aktorelement umfassen, in einem Standby-Modus so gesteuert wird, dass der erste Aktor und der zweite Aktor jeweils mit 50% ihrer maximal anlegbaren Spannung beaufschlagt werden. Hierzu kann eine entsprechende Regelungs- oder Steuerungseinheit verwendet werden, die die jeweiligen piezoelektrischen Aktorelemente so steuert, dass sie mit dem Spannungswert beaufschlagt werden. Dies führt beim Anschalten der Aktoreinrichtung bzw. im Standby-Modus allgemein dazu, dass die Piezo-Aktoren in eine Art Vorspannung bzw. in eine Standby-Position versetzt werden, aus der heraus sie dann ihre weitere Bewegung vollziehen können. Ein solches Dosierverfahren ist insbesondere dann geeignet, wenn der erste Aktor und der zweite Aktor gegeneinander geschaltet sind, d. h. wenn ihre Wirkrichtungen genau entgegengesetzt zueinander wirken. Dadurch halten die beiden Aktoren sich gegenseitig in einem Gleichgewicht, und die Austrittsöffnung wird in eine Art Mittelposition zwischen ihren beiden möglichen Extrempositionen überführt. Die beiden möglichen Extrempositionen würden hingegen dann erreicht, wenn ein Aktor mit 100% seiner maximal anlegbaren Spannung beaufschlagt wäre und der andere mit 0% seiner maximal anlegbaren Spannung.

Das Dosierventil kann allgemein zu einem Dosiersystem weitergebildet sein, das zusätzlich zum Dosierventil eine Regelungs- oder Steuerungseinheit, insbesondere eine elektronische Regelungs- oder Steuerungseinheit umfasst, die so ausgebildet ist, dass sie den Betrieb des Dosierventils regelt bzw. steuert.

Im Folgenden wird noch im Detail auf Besonderheiten der Erfindung im Rahmen einer besonders vorteilhaften Ausführungsform eines offenen Dosiersystems eingegangen.

Ein solches Dosiersystem ist insbesondere geeignet bzw. ausgebildet zur Dosierung eines scherverdünnenden oder thixotropen, flüssigen bis zähflüssigen Dosierstoff. Es umfasst eine Düse mit einem Verschlusskanal. Die Austrittsöffnung und ggf. zusätzlich das Verschlusselement wird bzw. werden im Betrieb gesteuert durch eine automatische Steuerungseinheit in der Ausstoß- bzw. Rückzugsrichtung bewegt, wobei die Austrittsöffnung bzw. der Verschlusskanal in mindestens einem Querschnitt senkrecht zur Ausstoß- und/oder Rückzugsrichtung im Verhältnis zum Querschnitt des Verschlusselements in derselben Schnittebene so ausgebildet ist, dass sich zwischen der Außenoberfläche des Verschlusselements und der Innenoberfläche des Verschlusskanals ein Durchlassspalt ergibt. Dieser Durchlassspalt ist so geformt und/oder dimensioniert, dass er mindestens bereichsweise einen Durchlasskanal für den Dosierstoff bildet. Die Steuerungseinheit ist so ausgebildet, dass sie im Betrieb Steuersignale für unterschiedliche Bewegungen der Austrittsöffnung und ggf. zusätzlich des Verschlusselements in mindestens zwei Bewegungsmodi generiert, wobei sie zumindest in einem der Bewegungsmodi die Austrittsöffnung (und evtl. das Verschlusselement) im Betrieb gezielt so bewegt, dass die Viskosität des Dosierstoffs mindestens in einem Bereich des Durchlassspalts reduziert wird. Entsprechend dieser Merkmale kann auch das erfindungsgemäße Dosierverfahren ausgebildet sein. Dabei erfolgt die Reduzierung der Viskosität vorzugsweise in einem der Bewegungsmodi in einer Weise, in der ohne weitere Maßnahmen kein Dosierstoff abgegeben wird, d. h. das Bewegungsmuster ist so gewählt, dass der Dosierstoff lediglich in einem derart reduzierten viskosen Zustand gehalten wird, dass die Viskosität gerade noch so groß ist, dass der Dosierstoff während der Bewegung noch in der Düse gehalten wird, aber in einem weiteren Bewegungsmodus (z. B. mit einer stärkeren Bewegung der Austrittsöffnung und ggf. zusätzlich des Verschlusselements) leicht abgegeben werden kann.

Die Dimensionierung des Querschnitts des Verschlusselements im Verhältnis zum Querschnitt der Austrittsöffnung bzw. des Verschlusskanals wird einerseits in Abhängigkeit von der Viskosität des zu applizierenden Dosierstoffs (bzw. dessen Viskosität in Abhängigkeit von einem Bewegungszustand) und andererseits von einem an den Dosierstoff angelegten Druck gewählt. Als Faustregeln gelten dabei:
- Je höher der Druck des Dosierstoffs ist, desto kleiner kann der Durchlassspalt dimensioniert sein.
- Je niedriger die Viskosität des Dosierstoffs in einem Ruhezustand des Dosierstoffs ist, desto kleiner kann der Durchlassspalt dimensioniert sein.
- Je niedriger die Viskosität des Dosierstoffs in einem Bewegungszustand ist, desto kleiner kann der Durchlassspalt dimensioniert sein.

Die Größe des Durchlassspalts im Querschnitt, d.h. die Querschnittsfläche des Durchlassspalts, wird so gewählt, dass der Dosierstoff bei einem Stillstand der Austrittsöffnung (und ggf. des Verschlusselements) keine oder eine deutlich verminderte Bewegung im Vergleich zu einem freien Fluss unter gleichen Druckverhältnissen durchführt. Mit anderen Worten wird der Durchlassspalt zwischen Verschlusselement und Austrittsöffnung bzw. Verschlusskanal in Abhängigkeit vom jeweiligen Dosierstoff und/oder vom angelegten Druck des Dosierstoffs so dimensioniert, dass sich trotz des Durchlassspalts eine durch die Scherviskosität des Dosierstoffs bedingte Verschlusswirkung innerhalb der Düse ergibt. Andererseits soll der Durchlassspalt auch so dimensioniert sein, dass die Viskosität des Dosierstoffs bei einer ausreichenden Bewegung der Austrittsöffnung (und ggf. zusätzlich des Verschlusselements) innerhalb des Verschlusskanals so reduziert wird, dass der Dosierstoff durch den Durchlassspalt fließen und ein volumetrisches Nachführen gewährleistet werden kann. Damit wird der Durchlassspalt zum Durchlass für den Dosierstoff, sobald sich die Austrittsöffnung (und ggf. zusätzlich das Verschlusselement) bewegt. Die Verschlusswirkung durch das Zusammenspiel zwischen Verschlusselement und Austrittsöffnung bzw. Verschlusskanal ist daher eine temporäre und wird bei Bewegung der Austrittsöffnung (ggf. unterstützt durch eine Bewegung des Verschlusselements) durch eine Anregung des Dosierstoffs zum Fließen in das Gegenteil verkehrt.

Mit einer solchen Methode beziehungsweise einer solchen Düse ist es möglich, spezielle, auch hochviskose, nämlich thixotrope und scherverdünnende Dosierstoffe im Betrieb der Düse so aufzubereiten, dass sie ihre Viskositätseigenschaften automatisch ändern, nämlich reduzieren, wenn die Austrittsöffnung (ggf. kombiniert mit dem Verschlusselement) bewegt wird. Im Gegensatz zu den üblichen Düsenverschlüssen, bei denen ein Verschlusselement auf die Austrittsöffnung gedrückt wird, um diese zu verschließen, und bei denen das Verschlusselement von der Austrittsöffnung der Düse wegbewegt wird, um die Austrittsöffnung freizugeben, kann die Austrittsöffnung hier also jederzeit frei gehalten sein. Dennoch ergeben sich eben gerade nicht die Nachteile, wie sie der oben zitierte Stand der Technik aufweist: Der an den Dosierstoff angelegte Druck braucht nicht drastisch erhöht zu werden; vielmehr genügt es, herkömmliche Druckverhältnisse bereitzustellen, wie sie auch bei niedrigviskosen Dosierstoffen angelegt werden. Gleichzeitig kann durch die Reduzierung der Viskosität des Dosierstoffs im Betrieb der Düse erreicht werden, dass er überhaupt und zudem genauer durch eine definierte Bewegung der Austrittsöffnung in die Ausstoßrichtung dosiert werden kann. Es ist also eine feinere Dosierung möglich und ein hochpräziser vorab definierter Tropfenabriss jedes einzelnen Tropfens des Dosierstoffs kann erzielt werden. Dies erhöht auch die Dosiergeschwindigkeit, d.h. im Endeffekt den potenziellen Durchsatz des erfindungsgemäßen Dosiersystems.

Wie oben erläutert, gibt es dabei bevorzugt mindestens zwei verschiedene Bewegungsmodi der Austrittsöffnung (ggf. in Kombination mit Bewegungsmodi des Verschlusselements), die dazu dienen können, unterschiedliche Funktionen während des Dosierprozesses des Dosierstoffs abzudecken.

Eine erste solche Funktion wäre beispielsweise die des Flüssighaltens des Dosierstoffs in einem Flüssighaltemodus. Hierzu umfasst ein erster Bewegungsmodus bevorzugt ein Bewegungsmuster mit hochfeinen Hin- und Herbewegungen der Austrittsöffnung (und ggf. des Verschlusselements), deren Hub (d. h. Amplitude) und/oder Frequenz und/oder Rhythmus so gewählt sind, dass sie zur Überwindung von Kräften innerhalb des Dosierstoffs geeignet sind, die die Viskosität desselben signifikant, d.h. um mindestens 50%, bevorzugt um mindestens 99%, reduzieren. Als "hochfeine" Hin- und Herbewegung ist dabei eine solche Bewegung zu verstehen, deren Hub geringer und deren Frequenz höher ist als die Bewegung im (unten näher spezifizierten) zweiten Bewegungsmodus. Vorzugsweise liegt die Frequenz der hochfeinen Bewegung oberhalb von 10 kHz. Eine einfache Oszillationsbewegung mit einem sehr geringen Hub ist bei richtiger Wahl der (im Vergleich zum zweiten Bewegungsmodus erhöhten) Frequenz beziehungsweise des Rhythmus bereits dazu geeignet, eine solche Reduzierung der Viskosität zu erzielen. Dieser erste Bewegungsmodus dient also dazu, den Fluss des Dosierstoffes zu gewährleisten. Das Bewegungsmuster mit den hochfeinen Oszillationsbewegungen führt aber vorzugsweise unter den jeweils vorgegebenen Druckverhältnissen des Dosierstoffs im Dosiersystem allein, also ohne eine geeignete Ausstoßbewegung durch die Austrittsöffnung (bzw. das Verschlusselement), wie sie z. B. nachfolgend beschrieben wird, nicht dazu, dass Dosierstoff aus der Düse fließt.

Eine zweite solche Funktion dient dagegen bevorzugt dem Ausstoß des Dosierstoffs durch die Austrittsöffnung der Düse. Hierzu umfasst ein zweiter Bewegungsmodus ein Bewegungsmuster mit Ausstoßbewegungen der Austrittsöffnung (und ggf. zusätzlich des Verschlusselements), deren Hub und/oder Frequenz und/oder Rhythmus so gewählt ist, dass sie dazu geeignet sind, dass das Verschlusselement den Dosierstoff tropfen- und/oder strahlweise durch die Austrittsöffnung der Düse herausdrückt, wenn die Austrittsöffnung in Ausstoßrichtung, also gegen das Verschlusselement, bewegt wird. Wird die Austrittsöffnung in der Rückzugsrichtung bewegt, kann Dosierstoff in der Düse vor das Verschlusselement strömen, um dann bei der nächsten Bewegung der Austrittsöffnung in der Ausstoßrichtung aus der Düse ausgestoßen zu werden. Bei dieser zweiten Art von Bewegungsmuster ist der Hub betragsmäßig bevorzugt größer als der bei oben erwähnten hochfeinen Bewegungsmuster des ersten Bewegungsmodus, wobei die Frequenz auch kleiner gewählt sein kann und ein Rhythmus ebenfalls längere Abstände beinhalten kann als der Rhythmus im Zusammenhang mit der ersten Funktion.

Es bleibt zu erwähnen, dass ein Bewegungsmodus auch dadurch definiert sein kann, dass sich die Austrittsöffnung (und auch das Verschlusselement) eben gerade nicht bewegt. Dieser Bewegungsmodus kann als Stillstand- oder Verschlussmodus bezeichnet werden, da der Dosierstoff durch die komplette Inaktivität von Austrittsöffnung und Verschlusselement zunächst abgebremst wird und dann in einem Stillstand verbleibt. In diesem Stillstand erhöht sich seine Viskosität signifikant, so dass kein weiterer Durchfluss durch den Durchlassspalt mehr möglich ist.

Ein weiterer Bewegungsmodus kann bevorzugt ein Bewegungsmuster mit Hin- und Herbewegungen zwischen zwei Extremstellungen aufweisen, wobei die Austrittsöffnung (und ggf. zusätzlich das Verschlusselement) zumindest in einer Extremstellung eine bestimmte Zeitspanne lang festgehalten wird. Dies ist insbesondere in einem Bewegungsmodus von Vorteil, der dem Ausstoß des Dosierstoffs durch die Austrittsöffnung der Düse dient. Es kann dann beispielsweise bewusst dafür gesorgt werden, dass der Dosierstoff in einer bestimmten Stellung der Austrittsöffnung vor einem Ausstoßen des Dosierstoffs zunächst vor das Verschlusselements fließen kann oder dass nach dem Ausstoß eines Tropfens der Dosierstoff zunächst etwas zur Ruhe kommt und die Fließbewegung so stärker abgestoppt wird.

Besonders bevorzugt ist die Steuerungseinheit so ausgebildet, insbesondere programmiert, dass sie die unterschiedlichen Bewegungen, d. h. die unterschiedlichen Bewegungsmuster und/oder Bewegungsmodi miteinander kombiniert. Z. B. kann ein Bewegungsmodus vorteilhafterweise eine Überlagerung von unterschiedlichen Bewegungsmustern aufweisen. Insbesondere können die Bewegungen der ersten und zweiten erwähnten Funktionen einander überlagert werden, so dass beispielsweise Oszillationen gemäß dem ersten Bewegungsmuster mit Ausstoßbewegungen größeren Hubs gemäß dem zweiten Bewegungsmuster so kombiniert sind, dass die Ausstoßbewegungen eine Art innere Zitterbewegung enthalten. Bevorzugt kann die Steuerung auch so erfolgen, dass unterschiedliche Bewegungsmodi nacheinander, vorzugsweise abwechselnd, durchgeführt werden. Die abwechselnde Durchführung bietet den Vorteil, dass sehr zielgerichtet und präzise zu bestimmten Zeiten der Ausstoß des Dosierstoffs veranlasst wird.

Welche Bewegungsmuster in den einzelnen Bewegungsmodi durchgeführt werden, beispielsweise welche exakten Parameter (Hub, Frequenz etc.) die Bewegungsmuster aufweisen und ob eine Überlagerung von Bewegungsmustern erfolgt, und in welcher Reihenfolge welche Bewegungsmodi durchlaufen werden, hängt von den Parametern des Dosierstoffs sowie der konkreten Dosieraufgabe ab (z. B. ob der Dosierstoff tropfenweise abgegeben werden soll, und wenn ja, mit welchen Tropfengrößen und in welchem zeitlichen Abstand). Die Steuerungseinheit kann daher bevorzugt einen Speicher aufweisen, in dem für verschiedene Dosierstoffe und Dosieraufgaben die Bewegungsmuster für die verschiedenen Bewegungsmodi sowie die Abfolge der Bewegungsmodi hinterlegt sind.

Um einen Durchfluss des Dosierstoffs durch den Durchlassspalt zu ermöglichen, ist es notwendig, dass der Durchlassspalt mindestens eine Ausdehnung zwischen der Außenoberfläche des Verschlusselements und der Innenoberfläche des Verschlusskanals entsprechend der Ausdehnung von einem, bevorzugt von mindestens drei Partikeln des Dosierstoffs nebeneinander, besonders bevorzugt mindestens 0,05 mm, aufweist. Dabei ist zu beachten, dass mindestens jeweils die größten Partikel des Dosierstoffs durch den Durchlassspalt passieren können müssen. Der Begriff des "Partikels" ist in diesem Zusammenhang sehr flexibel zu definieren: Er umfasst auch Polymerketten oder einzelne Teilverbünde davon, die bei Ausübung von Scherkräften auf Polymerketten vereinzelt werden können. Als "größte Partikel" werden in diesem Zusammenhang jene Partikel bezeichnet, die bei Ausübung von Scherkräften, die die Viskosität substantiell verringern, vorhanden sind: Insbesondere bei Polymerketten enthaltenden Dosierstoffen kann die Reduzierung der Viskosität nämlich auch dadurch entstehen, dass die Polymerketten bereichsweise aufgerissen werden und somit eben kleinere Partikelgrößen entstehen, deren größtes durch den Durchlassspalt passieren können muss. Die Größenangabe der Mindestausdehnung bezieht sich weiterhin mindestens auf eines der größten Partikel des Dosierstoffs in dem Sinne, dass es in seiner Ausdehnungsrichtung mit der geringsten Ausdehnung den höchsten Ausdehnungswert aller Partikel des Dosierstoffs aufweist. Mit dieser geringsten Ausdehnung ist dabei eine solche Ausdehnung gemeint, die dann entsteht, wenn das Partikel innerhalb seiner ihm eigenen Elastizitätsgrenzen zusammengedrückt wird.

Der Fluss des Dosierstoffs kann insbesondere dann gewährleistet werden, wenn eine Mehrzahl, d.h. mindestens zwei, bevorzugt mindestens drei Partikel im Durchlassspalt nebeneinander Platz finden. In Versuchen hat sich herausgestellt, dass ein ringförmiger Durchlassspalt besonders gut geeignet ist, um einen kontrollierten Durchfluss bzw. eine kontrollierte Verschlusswirkung zu erzielen. Dies kann durch einen kreisförmigen Querschnitt der Innenoberfläche des Verschlusskanals bzw. der Austrittsöffnung in Kombination mit einem kreisförmigen Querschnitt des Verschlusselements und eine vorzugsweise axial zentrierte Anordnung des Verschlusselements im Verschlusskanal erreicht werden. Die Versuche haben weiterhin ergeben, dass bei einem solchen ringförmigen Durchlassspalt einer Spaltbreite im Querschnitt von 0,1 mm +/-10 % Varianz bei den derzeitigen typischen Druckverhältnissen besonders gut geeignet ist, um einen guten Durchfluss im Bewegungszustand der Austrittsöffnung (ggf. in Kombination mit der des Verschlusselements) und einen guten Verschluss im Ruhezustand derselben zu erreichen. Bei Dosierstoffen wie denen der eingangs genannten Art werden derzeit typisch Drücke von 0,5 bis 8 bar angelegt. Andere Geometrien sind aber prinzipiell auch möglich. Die Obergrenze der Ausdehnung des Durchlassspalts zwischen der Außenoberfläche des Verschlusselements und der Innenoberfläche des Verschlusskanals, d. h. der lichten Spaltbreite des Durchlassspalts, definiert sich wie folgt: Der aufgrund der Ausdehnung auf den Dosierstoff wirkende Strömungswiderstand muss mindestens gleich groß sein wie ein Strömungswiderstand auf den Dosierstoff im Bereich der Austrittsöffnung der Düse. Wäre der Strömungswiderstand im Bereich des Verschlusskanals nämlich kleiner als im äußersten Bereich der Austrittsöffnung, so würde der Dosierstoff nicht aus der Austrittsdüse gedrückt. In Versuchen und Simulationen hat sich folgende Matrix der Ausdehnung (d. h. der Spaltbreite) des Durchlassspalts in Abhängigkeit von den Dimensionierungen der Austrittsöffnung und des Verschlusselements ergeben, vorausgesetzt, dass die Austrittsöffnung immer 0,5 mm lang und die Länge des Durchlassspalts, durch den Dosierstoff geführt wird, immer 10 mm beträgt:

| Durchmesser der Austrittsöffnung in mm | Durchmesser des Verschlusselements, realisiert als im Bereich des Durchlassspalts zylindrisch geformter Stößel, in mm | Maximale Spaltbreite in mm |
|---|---|---|
| 0,05 | 1 | 0,006 |
| 0,1 | | 0,02 |
| 0,2 | | 0,09 |
| 0,4 | | 0,35 |
| 1 | | 2,3 |
| 0,05 | 1,5 | 0,004 |
| 0,1 | | 0,015 |
| 0,2 | | 0,05 |
| 0,4 | | 0,24 |
| 1 | | 1,5 |
| 0,05 | 2 | 0,003 |
| 0,1 | | 0,012 |
| 0,2 | | 0,045 |
| 0,4 | | 0,18 |
| 1 | | 1,12 |
| 0,05 | 4 | 0,001 |
| 0,1 | | 0,005 |
| 0,2 | | 0,023 |
| 0,4 | | 0,09 |
| 1 | | 0,56 |

Diese jeweiligen Parameterwert-Kombinationen sind jeweils als bevorzugte Ausführungsformen zu verstehen.

Bei der Dimensionierung des Durchlassspalts sollte bevorzugt neben dem Strömungswiderstand auch berücksichtigt werden, dass der Dosierstoff im Durchlassspalt langsam von einem fließenden in einen ruhenden Zustand überführt werden und dann den Durchlassspalt verschließen soll. Der Durchlassspalt muss also eine gewisse Abbremswirkung ermöglichen. Diese Abbremswirkung wird bevorzugt immer dann eingeleitet, wenn die Austrittsöffnung mit dem Verschlusskanal (und ggf. das Verschlusselement) von einer Bewegung relativ zum Verschlusskanal in einen Stillstand versetzt wird.

Statt einer ringförmigen oder anderweitig umlaufenden Form kann der Durchlassspalt im Querschnitt auch nur in einem diskreten Bereich ausgebildet sein, beispielsweise durch eine Aussparung im Verschlusselement. Die jeweilige Form kann je nach Anwendungsgebiet, insbesondere in Abhängigkeit von den oben erläuterten Einflussfaktoren des Drucks auf den Dosierstoff und seiner Viskosität, individuell gewählt sein. Das entsprechende Dosiersystem umfasst daher bevorzugt eine Mehrzahl an (Austausch-) Verschlusselementen und/oder an (Austausch-) Verschlusskanälen, von denen mindestens ein Verschlusselement und ein Verschlusskanal aufeinander in ihrer Form so abgestimmt sind, dass sie im Zusammenwirken einen Durchlassspalt der oben näher erläuterten Art bilden. Diese Austausch-Vorrichtungen können daher in Abhängigkeit vom jeweils zu dosierenden Dosierstoff in die Düse eingesetzt werden. Besonders bevorzugt weisen die jeweiligen (Austausch-) Verschlusselemente bzw. (Austausch-) Verschlusskanäle Markierungen auf, anhand derer ihre gegenseitige Zuordnung und/oder ihre Eignung für bestimmte Dosierstoffe ableitbar ist. Beispielsweise kann der Ventilkammerkopf den Verschlusskanal aufweisen bzw. bilden.

Besonders bevorzugt weist die Düse weiterhin einen Dosierstoff-Sammelhohlraum im Düsenbereich auf, besonders bevorzugt in einem Düsenendbereich angrenzend an die Austrittsöffnung. Dieser Dosierstoff-Sammelhohlraum ist zwischen dem Verschlusskanal und der Austrittsöffnung angeordnet und so geformt und/oder lokalisiert, dass das Verschlusselement aufgrund seiner Form und/oder Lokalisierung ihn zumindest nicht vollständig ausfüllt. Es ist bevorzugt ein Dosierstoff-Sammelhohlraum, dessen Dimensionen im Querschnitt größer sind als die Gesamtfläche des Durchlassspalts zwischen dem Verschlusselement und dem Verschlusskanal. Da der durch den Durchlassspalt geflossene Dosierstoff in diesem Dosierstoff-Sammelhohlraum gesammelt und dann gezielt durch einen größeren Hub der Austrittsöffnung (ggf. in Kombination mit einem Hub des Verschlusselements) bei einer Bewegung in der Rückzugsrichtung durch die Austrittsöffnung gestoßen werden kann, ist ein klar dosierter, schneller und präziser Ausstoß des Dosierstoffs, insbesondere in Tropfenform, möglich.

Um den Dosierstoff in der Düse bereitzustellen, wird er über eine Leitung aus einer Dosierstoffvorratskammer zugeführt. Prinzipiell ist es möglich, den Durchlassspalt lediglich als eine Art Reservoir oder Aktivierungsbereich für den Dosierstoff vorzusehen, in dem Teile des zugeführten Dosierstoffs abgelagert und durch entsprechende Bewegungen der Austrittsöffnung (und ggf. des Verschlusselements) verflüssigt werden. Bevorzugt umfasst das Dosiersystem hingegen eine Zuführung einer Leitung aus einer Dosierstoffvorratskammer zur Bereitstellung des Dosierstoffs, wobei die Zuführung in den durch den Verschlusskanal gebildeten Durchlassspalt führt und/oder an einem einer Austrittsöffnung der Düse abgewandten Ende des Verschlusskanals angeordnet ist. Die Zuführungsleitung aus der Dosierstoffvorratskammer führt also in diesem Falle - z. B. über die bereits oben erwähnten Öffnungen bzw. Bohrungen in der Ventilkammer - direkt oder indirekt in den Bereich des Verschlusskanals, das heißt des Durchlassspalts. Dies hat den Effekt, dass der Dosierstoff auf jeden Fall zumindest bereichsweise durch den Durchlassspalt hindurch fließen muss, so dass der Durchlassspalt eine Öffnungs- bzw. Verschlusswirkung für den Fluss des Dosierstoffs ausübt.

Das Dosiersystem umfasst wie erwähnt bevorzugt außerdem eine Dosierstoffvorratskammer, die über eine Leitung in Richtung einer Austrittsöffnung mit der Düse verbunden ist. Die Bevorratung des Dosierstoffs erfolgt also innerhalb des Dosiersystems, so dass dieses als eine Einheit verbaut beziehungsweise transportiert werden kann.

Wie bereits ausgeführt, wird die Bewegung der Austrittsöffnung mithilfe einer Aktoreinrichtung durchgeführt. Hierzu bzw. zur Druckregelung umfasst das Dosiersystem bevorzugt eine elektronische Steuerungseinheit zur Steuerung der Aktoreinrichtung und/oder eines Drucks in einer Dosierstoffvorratskammer des Dosiersystems. Die Steuerungseinheit muss nicht zwangsläufig innerhalb des Dosierventils, sondern kann auch außerhalb angeordnet sein. Über Signalleitungen kann sie dann mit dem Inneren des Dosierventils verbunden sein. Die Aktoreinrichtung ist also nicht aufgrund einer ihr inhärenten Logik aktiv, sondern sie wird "intelligent" durch eine elektronische Steuerungseinheit gesteuert, die beispielsweise einen Prozessor umfassen kann, der softwaregesteuert Steuersignale an die Aktoreinrichtung abgibt. Derartige Steuerungseinheiten erreichen heute Taktraten der Dosierung im Bereich von 14 kHz, was bedeutet, dass die Bewegung der Austrittsöffnung (und ggf. des Verschlusselements) hochfein gesteuert werden kann. Dabei kann diese Steuerungseinheit so ausgebildet sein, dass sie im Betrieb Steuersignale für unterschiedliche Bewegungen der Austrittsöffnung (und ggf. des Verschlusselements) in mindestens zwei Bewegungsmodi generiert.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine Schnittansicht einer Ausführungsform eines erfindungsgemäßen Dosierventils in einem ersten Längsschnitt entlang der Schnittlinie G-G in Figur 2,
Figur 2 eine Draufsicht auf dasselbe Dosierventil,
Figur 3 eine Detailansicht von ausgewählten Elementen im Inneren desselben Dosierventils,
Figur 4 eine Schnittansicht desselben Dosiersystems in einem Querschnitt entlang der Schnittlinie C-C in Figur 1,
Figuren 5a, 5a und 5c Detailansichten der Ventilkammer desselben Dosierventils im Längsschnitt, in der Perspektive und in der Draufsicht von oben,
Figur 6 eine Schnittansicht desselben Dosierventils in einem zweiten Längsschnitt entlang der Schnittlinie F-F in Figur 2,
Figuren 7a bis 7c Detailansichten der Düsenkappe desselben Dosierventils in der Seitenansicht, in der Draufsicht von unten und in perspektivischer Ansicht,
Figuren 8a bis 8d Detailansichten des Düsenkörpers desselben Dosierventils in der Draufsicht von unten, in der Seitenansicht, in einer Schnittansicht (entlang einer Schnittlinie B-B in Figur 8b) und in perspektivischer Ansicht,
Figur 9 eine schematische Bewegungskurve einer Austrittsöffnung gemäß einer ersten Ausführungsform des erfindungsgemäßen Dosierverfahrens,
Figur 10 eine schematische Bewegungskurve einer Austrittsöffnung gemäß einer zweiten Ausführungsform des erfindungsgemäßen Dosierverfahrens,
Figur 11 eine schematische Bewegungskurve einer Austrittsöffnung gemäß einer dritten Ausführungsform des erfindungsgemäßen Dosierverfahrens,
Figur 12 eine schematische Bewegungskurve einer Austrittsöffnung gemäß einer vierten Ausführungsform des erfindungsgemäßen Dosierverfahrens.

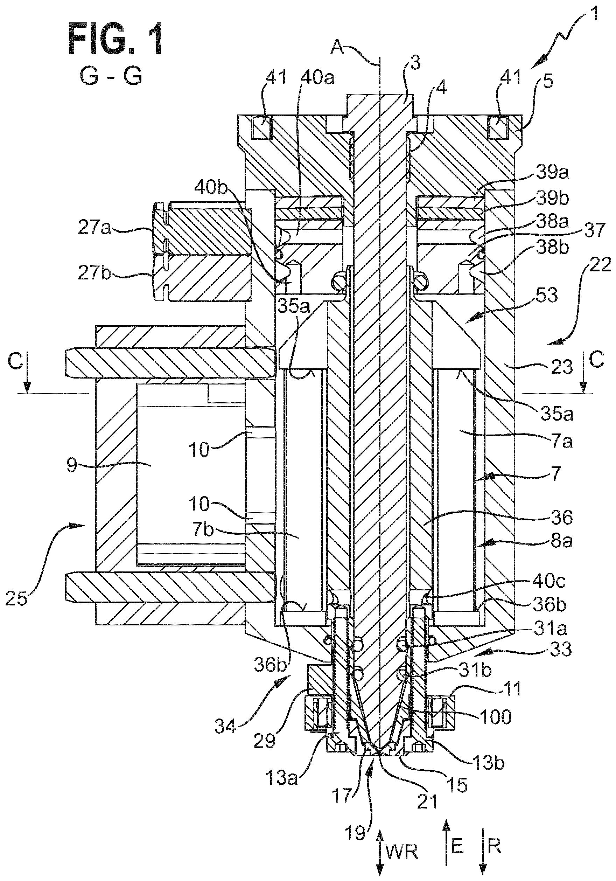

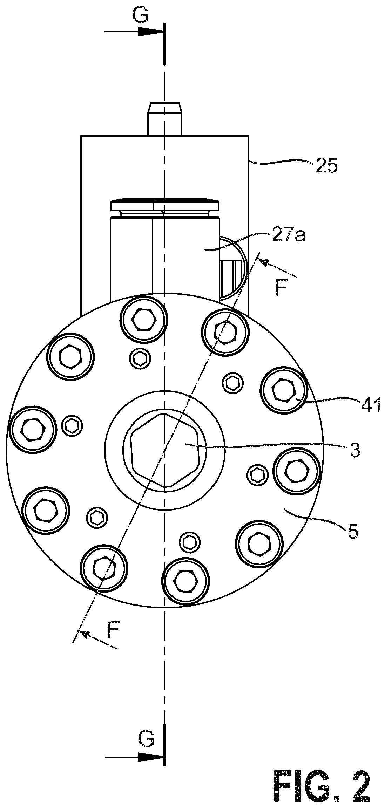

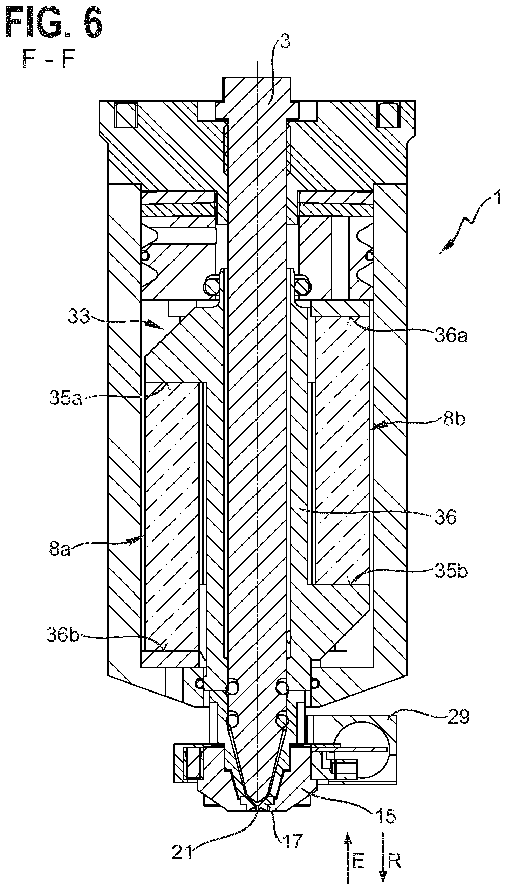

Die Figuren 1 bis 6 zeigen ein Dosierventil 1 gemäß einer Ausführungsform der Erfindung in verschiedenen Komplett- und Detail-Ansichten, wobei Figuren 1 und 6 Schnittansichten entlang Schnittlinien G-G bzw. F-F in Fig. 2 zeigen und im Wesentlichen auf diese beiden Figuren Bezug genommen wird.

Das Dosierventil 1 umfasst eine Ventilkammer 33 mit einer Düse 19 und ein Ventilgehäuse 22, in dem außer der Ventilkammer 33 eine Aktorenkammer 53 angeordnet ist. Das Ventilgehäuse 22 umfasst einen ersten, unteren Gehäuseteil 23 und einen zweiten, oberen Gehäuseteil 5 in Form einer Abdeckung 5. Die beiden Gehäuseteile 5, 23 sind über Halteschrauben 41 miteinander verbunden.

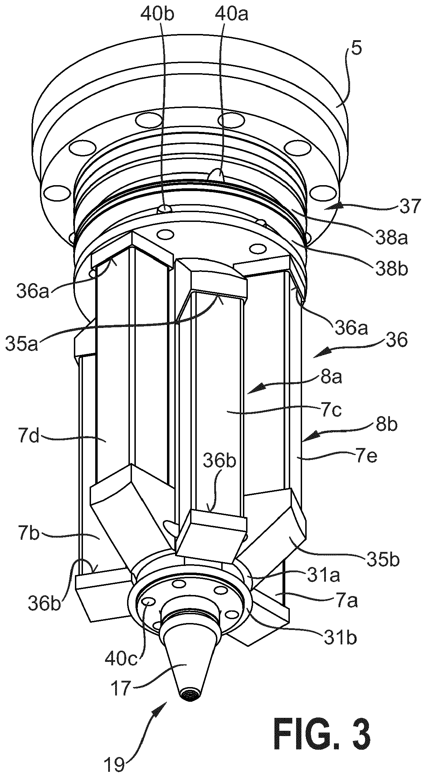

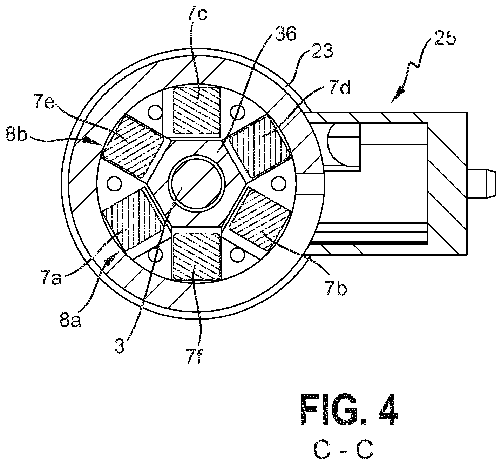

Im Ventilgehäuse 22 ist zentral die Aktorenkammer 53 angeordnet. In einer Ausrichtung entlang einer (Mittel-)Achse A sind unterhalb der Abdeckung 5, verbunden über Tellerfedern 39a, 39b und einen beweglich angebrachten Widerlagerblock 37 (d. h. eine Widerlagermasse) ein erster piezoelektrischer Aktor 8a und ein zweiter piezoelektrischer Aktor 8b (vgl. Fig. 6) ausgerichtet und entlang der Ausrichtung der Achse A positioniert. Gemeinsam bilden die piezoelektrischen Aktoren 8a, 8b eine Aktoreinrichtung 7. Der erste piezoelektrische Aktor 8a umfasst drei erste piezoelektrische Aktorelemente 7a, 7b, 7c, der zweite piezoelektrische Aktor 8b drei zweite piezoelektrische Aktorelemente 7d, 7e, 7f. Zur Anordnung und Wirkungsweise dieser Aktorelemente 7a, 7b, 7c, 7d, 7e, 7f wird im Zusammenhang mit den Ausführungen zu den Figuren 3 und 4 näher eingegangen.

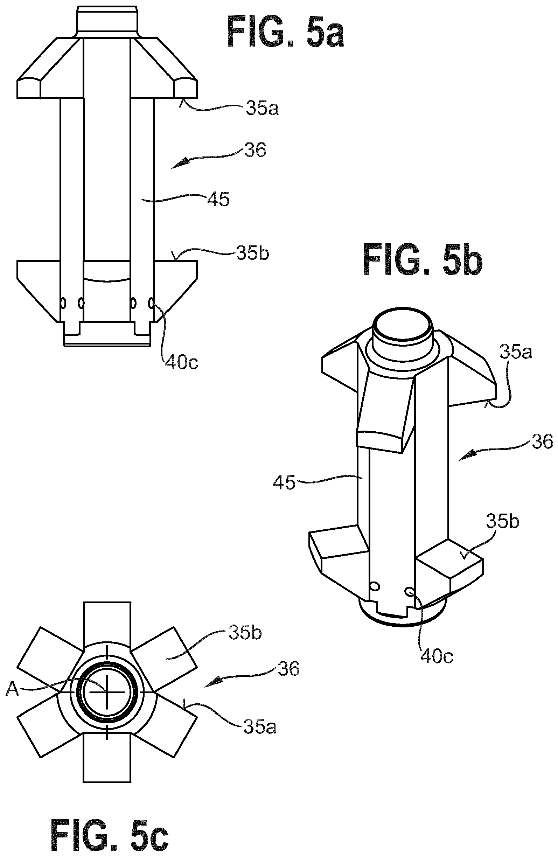

Zwischen den Aktorelementen 7a, 7b, 7c, 7d, 7e, 7f gekoppelt ist im Ventilgehäuse 22 eine Ventilkammer 33 angebracht. Zur genauen Geometrie und Kopplung mit den Aktorelementen 7a, 7b, 7c, 7d, 7e, 7f sowie zur Wirkungsweise der Ventilkammer 33 wird auf die Ausführungen unten im Zusammenhang mit den Figuren 5a bis 5c hingewiesen.

Linkerhand in Fig. 1 befinden sich oben - unterhalb der Abdeckung 5 - am unteren Gehäuseteil 23 zwei Druckluftanschlüsse 27a, 27b. Unterhalb der Druckluftanschlüsse 27a, 27b ist weiterhin ein Elektronikgehäuse 25 mit einer Steuerungseinheit 9 angebracht, die über (nicht dargestellte) elektrische Verbindungsleitungen, welche durch Verbindungsbohrungen 10 in das Ventilgehäuse 22 verlaufen, mit den beiden piezoelektrischen Aktoren 8a, 8b verbunden ist und diese im Betrieb des Dosierventils steuert. Das Elektronikgehäuse ist hier fest am Ventilgehäuse 22 des Dosierventils 1 befestigt, es kann jedoch auch abnehmbar angebracht sein.

Die Ventilkammer 33 besteht hier aus zwei Teilen, nämlich einem Ventilkammerkopf 34 im Bereich der Austrittsöffnung 21 bzw. im Bereich der Fluidik des Dosierventils 1 und einem Ventilkammergrundkörper 36, insbesondere im Bereich der Aktorenkammer 53.

Die Düse 19 ist mit einer daran angeklemmten Heizvorrichtung 11 versehen, die die Düse 19 im Betrieb heizen kann. Die Düse 19 selbst umfasst einen Düsenkörper 17, der sich nach unten im Bild hin verjüngt, und der in der Austrittsöffnung 21 endet. Darauf ist (unterseitig im Bild) eine Düsenkappe 15 angebracht, die die Düse 19 über Befestigungsschrauben 13a, 13b mit der Ventilkammer 33 verbindet. Dadurch ist der Düsenkörper 17 wie in einem Sandwich fest zwischen der Düsenkappe 15 und der Ventilkammer 33 eingeklemmt und bildet somit letztlich einen unteren Abschlussteil der Ventilkammer 33. Der Ventilkammerkopf 34 ist zwischen Düsenkappe 15 und Ventilkammergrundkörper 36 eingeklemmt

Mittig - ausgerichtet entlang der Achse A - ist ein feststehendes Verschlusselement 3 in Form eines Stößels 3 am Ventilgehäuse 22 angebracht. Der Stößel 3 ist über ein Gewinde 4 in der Abdeckung 5 des Ventilgehäuses 22 fest mit diesem verbunden. Er ist durch die Aktorenkammer 53 und hier durchgehend durch die Ventilkammer 33 geführt und kann von der Abdeckung 5 aus eingeschraubt werden, ohne das Ventilgehäuse 22 zu öffnen. Seine äußere Form verjüngt sich nach unten hin im Bereich der Düse 19 praktisch analog zur Innenform des Düsenkörpers 17, wobei zwischen dem Düsenkörper 17 und dem Stößel 3 immer ein gewisser Durchlassspalt 100 verbleibt, so dass die Düse des Dosierventils 1 nie vollkommen nach außen hin abgeschlossen ist.

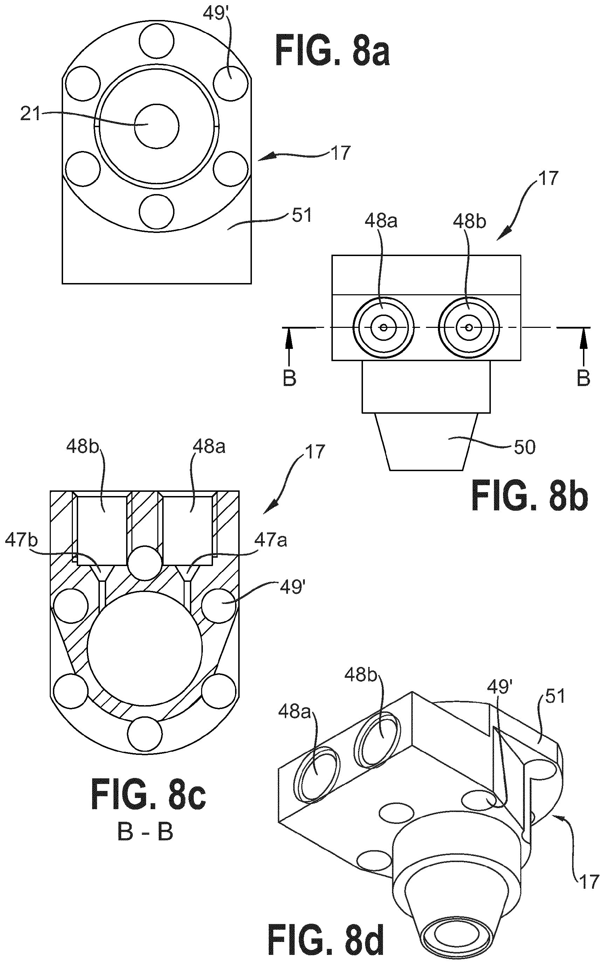

Gespeist wird die Düse 19 durch eine Dosierstoff-Zuführungseinheit 29, die über Kanäle bzw. Öffnungen (47a, 47b - vgl. Fig. 8) einen Dosierstoff (nicht dargestellt) in den Durchlassspalt 100 einspeist. Über den Durchlassspalt 100 gelangt der Dosierstoff weiter in Richtung der Austrittsöffnung 21. Der Bereich des Durchlassspalts 100, der "fluidische" Teil der Ventilkammer 33, ist von einem oberen "Aktorenbereich" der Ventilkammer 33, welcher sich in der Aktorenkammer 53 befindet, durch zwei Ringdichtungen 31a, 31b funktional und fluidisch getrennt, so dass kein Dosierstoff in diesen Aktorenbereich gelangen kann.

Wie oben erwähnt, würde bei Dosierventilen gemäß dem Stand der Technik das Verschlusselement 3, also der Stößel 3, bewegt, um den Dosierstoff durch die Austrittsöffnung zu befördern. Bei der Erfindung hingegen wird diese Bewegung des Verschlusselements 3 teilweise oder - wie im vorliegenden Ausführungsbeispiel - komplett durch eine Bewegung der Austrittsöffnung 21 ersetzt. Dies bedeutet, dass die Aktoreinrichtung 7 über eine Bewegung der Ventilkammer 33 die Austrittsöffnung 21 entlang einer Wirkrichtungsachse WR hin und her bewegt. Dabei wird sie in einer Ausstoßrichtung E nach oben und in einer Rückzugsrichtung R nach unten bewegt. Die Ausstoßrichtung E der Austrittsöffnung 21 ist dabei als die Bewegungsrichtung zu verstehen, in der der Dosierstoff vom Stößel 3 ausgestoßen wird. Bei Bewegung der Austrittsöffnung 21 in die Ausstoßrichtung E nämlich wird der Dosierstoff vom Stößel 3 durch die Austrittsöffnung 21 gestoßen. In der Rückzugsrichtung zieht sich dagegen der Stößel 3, relativ zur Austrittsöffnung 21, die ja nach vorne vom Stößel 3 weg bewegt wird, zurück.

Beide piezoelektrischen Aktoren 8a, 8b sind so angeordnet, dass sie im Betrieb im Wesentlichen in axialer Richtung entlang der Achse A auslenken. Bei den piezoelektrischen Aktoren 8a, 8b handelt es sich um Piezo-Stacks aus rechteckigen Piezoelementen. Die beiden piezoelektrischen Aktoren 8a, 8b sind gegengleich geschaltet. Dies bedeutet, dass der erste piezoelektrische Aktor 8a seine Gesamtlänge in Längsrichtung, das heißt in vertikaler Richtung, reduziert, während der zweite piezoelektrische Aktor 8b seine Länge in derselben Richtung in demselben Maße gleichzeitig erhöht. Umgekehrt erhöht der erste piezoelektrische Aktor 8a seine Gesamtlänge in Längsrichtung, während der zweite piezoelektrische Aktor 8b seine Länge in derselben Richtung in demselben Maße gleichzeitig reduziert.

Im Betrieb des Dosierventils 1 generiert die elektronische Steuerungseinheit 9 erste Steuersignale und zweite Steuersignale, die an die beiden piezoelektrischen Aktoren 8a, 8b weitergegeben werden und deren Bewegung, d.h. Auslenkung steuern. Diese Steuersignale sind so ausgebildet, dass die beiden piezolektrischen Aktoren 8a, 8b gegenläufig angeregt werden. Hierdurch entsteht ein gegenläufiges Bewegungsmuster der beiden piezoelektrischen Aktoren 8a, 8b. Durch die Bewegung des ersten piezoelektrischen Aktors 8a, der mit der Austrittsöffnung 21 wirkverbunden ist, wird die Austrittsöffnung 21 zu einer Hub- und Schubbewegung angeregt. Zieht sich also der zweite piezoelektrische Aktor 8b zusammen, während sich der erste piezoelektrische Aktor 8a gleichzeitig ausdehnt, so wird die Austrittsöffnung 21 durch den ersten piezoelektrischen Aktor 8a in die Ausstoßrichtung E gedrückt. Bei der gegenläufigen Bewegung wird die Austrittsöffnung 21 in die Rückzugsrichtung R durch den zweiten piezoelektrischen Aktor 8b nach unten geschoben. Die, hier gemeinsame, Wirkrichtungsachse WR der beiden piezoelektrischen Aktoren 8a, 8b ist also genauso an der Achse A ausgerichtet wie die Ausstoß- bzw. Rückzugsrichtungen E, R, wobei durch die indirekte Kopplung der Austrittsöffnung 21 mit der aus dem ersten piezoelektrischen Aktor 8a und dem zweiten piezoelektrische Aktor 8b gebildeten Aktoreinrichtung 7 dafür gesorgt ist, dass die Austrittsöffnung 21 immer durch den sich jeweils ausdehnenden piezoelektrischen Aktor 8a, 8b in die gewünschte Richtung geschoben wird.

Über die Druckluftanschlüsse 27a, 27b kann Druckluft in die Aktorenkammer 53 eingeleitet und dort geführt wieder zurückgeleitet werden. Der obere Druckluftanschluss 27a dient daher als Zuleitungsanschluss 27a, der untere Druckluftanschluss 27b als Ableitungsanschluss 27b. Zur Durchführung der Druckluft weist der Widerlagerblock 37 zwei umlaufende Rillen 38a, 38b sowie Durchlassbohrungen 40a, 40b als Kühlungskanäle auf. Vom Zuleitungsanschluss 27a über die obere Rille 38a wird die Druckluft durch die damit korrespondierende erste (obere, horizontale) Durchlassbohrung 40a in das Innere des oberen Teils der Ventilkammer 33 entlang des Stößels 3 geleitet und über (horizontale) Durchlassbohrungen 40c (als weitere Kühlungskanäle) in der Ventilkammer 33 weiter in Richtung der Aktoreinrichtung 7. Sie umströmt somit zwischen Ventilkammer 33 und Ventilgehäuse 22 die Aktorelemente 7a, 7b, 7c, 7d, 7e, 7f und gelangt dann über zweite (obere, vertikale) Durchlassbohrungen im Widerlagerblock 37 in den Bereich der zweiten Rille 38b, von aus sie in den Ableitungsanschluss 27b gelangt. Hierdurch kann die Druckluft als Kühlmedium im Bereich der Aktorenkammer 53 des Ventilgehäuses 22 zirkulieren und insbesondere die Aktoren 8a, 8b effektiv kühlen.

Fig. 3 zeigt eine perspektivische Ansicht ausgewählter Teile des erfindungsgemäßen Dosierventils 1, nämlich den Ventilkammergrundkörper 36 mit den Aktoren 8a, 8b bzw. den Aktorelementen 7a, 7b, 7c, 7d, 7e. Das Aktorelement 7f ist in dieser Ansicht durch den Ventilkammergrundkörper 36 verdeckt. Außerdem sind der Widerlagerblock 37 und die Abdeckung 5 gezeigt.

Die Aktorelemente 7a, 7b, 7c des ersten Aktors 8a sind endseitig an ihrer Unterseite, d. h. in Richtung der Austrittsöffnung 21, auf Widerlagerflächen 36b gelagert und endseitig an ihrer Oberseite, d. h. in der Gegenrichtung, auf Auflagerflächen 35a von nasenartigen (d. h. von der Oberseite abgeschrägten) Auflagerblöcken, die mit dem Ventilkammergrundkörper 36 fest verbunden sind bzw. aus dem Ventilkammergrundkörper 36 herausragen. Analog dazu sind die Aktorelemente 7d, 7e, 7f des zweiten Aktors 8b endseitig an ihrer Unterseite, d. h. in Richtung der Austrittsöffnung 21, auf Auflagerflächen 35b von entsprechenden nasenartigen Auflagerblöcken gelagert und endseitig an ihrer Oberseite, d. h. in der Gegenrichtung, auf Widerlagerflächen 36a. Auch die Auflagerblöcke mit den Auflagerflächen 36a sind mit dem Ventilkammergrundkörper 36 fest verbunden bzw. ragen aus dem Ventilkammergrundkörper 36 heraus. Die oberen Widerlagerflächen 36a hingegen sind (über den Widerlagerblock 37) federnd gegenüber dem Ventilgehäuse 22 (vgl. Fig. 1 und 6) gelagert, so dass bei Expansion der Aktorelemente 7a, 7b, 7c des ersten Aktors 8a den Ventilkammergrundkörper 36 nach oben und somit indirekt auch die Austrittsöffnung 21 in die Ausstoßrichtung E bewegt wird. Bei Expansion der Aktorelemente 7d, 7e, 7f des zweiten Aktors 8b wird der Ventilkammergrundkörper 36 nach unten und somit indirekt auch die Austrittsöffnung in die Rückzugsrichtung R bewegt.

Anhand von Fig. 3, Fig. 4 und den Figuren 5a bis c ist erkennbar, dass die Aktorelemente 7a, 7b, 7c, 7d, 7e, 7f radial um die Achse A, die zugleich auch die Mittelachse A des Ventilkammerelements 45 ist, angeordnet sind. Jeder der beiden Aktoren 8a, 8b weist drei Aktorelemente 7a, 7b, 7c bzw. 7d, 7e, 7f auf, wobei die Aktorelemente 7a, 7b, 7c bzw. 7d, 7e, 7f eines Aktors 8a, 8b jeweils zueinander um 120° um die Achse A versetzt sind und wobei sich immer ein Aktorelement 7a, 7b, 7c des ersten Aktors 8a mit einem Aktorelement 7d, 7e, 7f des zweiten Aktors 8b abwechselt. Hieraus ergibt sich eine gleichmäßige, rotationssymmatrische Anordnung der Aktorelemente 7a, 7b, 7c, 7d, 7e, 7f in einer Art Sternform, in der auch jeweils immer ein Aktorelement 7a, 7b, 7c des ersten Aktors 8a gegenüber einem Aktorelement 7d, 7e, 7f des zweiten Aktors 8b in Bezug auf die Mittelachse A liegt.

In Bezug auf die Figuren 5a und 5b ist noch anzumerken, dass der Ventilkammergrundkörper 36 als einstückiges Element ausgebildet ist. Er weist dabei einen Hauptkörper 45 und die Auflagerblöcke auf. An der Unterseite des Hauptkörpers 45, etwa auf Höhe des unteren Drittels der unteren Auflagerblöcke liegen die oben erwähnten Durchlassbohrungen 40c.

Fig. 6 zeigt zur Verdeutlichung des Wirkprinzips des Dosierventils eine zweite Längsschnittansicht entlang einer Schnittlinie F-F (vgl. Fig. 2). Hierin sind aufgrund der Schnittperspektive nicht zwei Aktorelemente desselben Aktors, sondern jeweils ein Aktorelement des ersten Aktors 8a und eines des zweiten Aktors 8b erkennbar. Zudem ist hier die Dosierstoff-Zuführungseinheit 29 im Schnitt gezeigt.

Die Montage des hier gezeigten Dosierventils 1 kann beispielsweise wie folgt durchgeführt werden: Zunächst werden die piezoelektrischen Aktorelemente 7a, 7b, 7c, 7d, 7e, 7f am Ventilkammergrundkörper 36 an den Auflagerflächen 35a, 35b festgeklebt. Die piezoelektrischen Aktorelemente 7a, 7b, 7c, 7d, 7e, 7f werden dann elektrisch mit der Steuerungseinheit 9 kontaktiert. Die zusammengefügte Einheit aus piezoelektrischen Aktorelemente 7a, 7b, 7c, 7d, 7e, 7f und 45 wird dann in das Ventilgehäuse 22 eingeschoben und oberseitig der Widerlagerblock 37 und die Tellerfedern 39a, 39b sukzessive auf die Einheit aufgelegt. Dann wird das Ventil mithilfe der Abdeckung 5 verschlossen und schließlich der Stößel 3, der oberseitig als Sechskant ausgebildet ist, über das Gewinde 4 in das Ventilgehäuse 22 eingeschraubt.

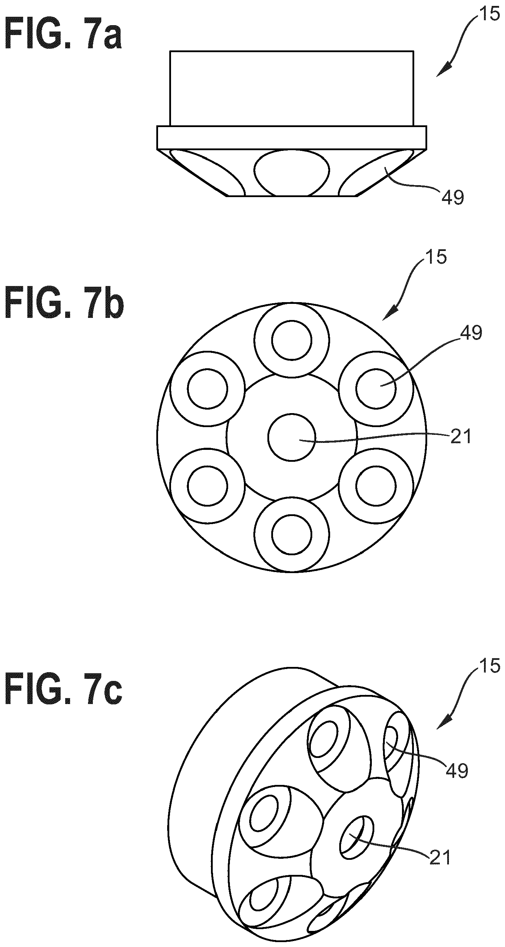

Fig. 7a zeigt in der Seitenansicht, Fig. 7b in der Ansicht von unten (in Bezug auf das in Fig. 1 bestimmungsgemäß dargestellte Dosierventil 1) und Fig. 7c in perspektivischer Ansicht die Düsenkappe 15. Sie ist mit Öffnungen 49 versehen, durch die Befestigungsschrauben, zum Beispiel die in Fig. 1 gezeigten Befestigungsschrauben 13a, 13b, durchgeführt werden können. Zentral mittig liegt eine Öffnung, in die der Düsenkörper mit der Austrittsöffnung 21 eingelegt wird. Durch Lösen der Befestigungsschrauben 13a, 13b kann die Düsenkappe 15 vom Düsenkörper 17 abgenommen und so letzterer freigelegt und beispielsweise zur Wartung ebenfalls vom Dosierventil 1 entfernt und ggf. durch einen anderen Düsenkörper ersetzt werden.

Wie bereits erwähnt, ist das Dosierventil 1 in der hier gezeigten Ausführungsform als offenes System realisiert. Im Rahmen der Erfindung ist es dabei besonders bevorzugt, bestimmte Bewegungsmodi der Austrittsöffnung 21 zu realisieren, die im Folgenden näher beschrieben werden:

Figuren 8a bis 8d zeigen den Düsenkörper 17 in mehreren Ansichten, nämlich Figur 8a in Draufsicht von unten, Fig. 8b in einer seitlichen Ansicht, Figur 8c in einer Schnittansicht entlang einer Schnittlinie B - B und Fig. 8d in perspektivischer Ansicht von schräg unten.

Insbesondere sind in diesen Ansichten Fortführungsbohrungen 49' erkennbar, die in ihrer Lage mit den Öffnungen 49 der Düsenkappe 15 korrespondieren, so dass Befestigungsschrauben, zum Beispiel die in Fig. 1 gezeigten Befestigungsschrauben 13a, 13b, durch sie durchgeführt werden können. Außerdem ist in den Figuren die Anordnung der Öffnungen 47a, 47b erkennbar, durch die der Dosierstoff in Richtung der Austrittsöffnung 21 in den Durchlassspalt 100 gelang. Außenseitig enden die beiden Öffnungen 47a, 47b in Anschlussöffnungen 48a, 48b, an denen die Verbindung zur Dosierstoff-Zuführungseinheit 29 hergestellt werden kann. Insbesondere in Fig. 8c ist erkennbar, dass die Öffnungen nicht zentral in das Innere des Düsenkörpers 17 führen, sondern seitig angeordnet sind, so dass die Öffnungen und damit auch der Dosierstoff nicht zentral auf den inneren Mittelpunkt des Düsenkörpers 17 gerichtet sind, sondern daran vorbei. Hierdurch kann beispielweise eine Ringführung des Dosierstoffs im Bereich des Durchlassspalts 100 ermöglicht werden bzw. auch eine Verwirbelung des Dosierstoffs.

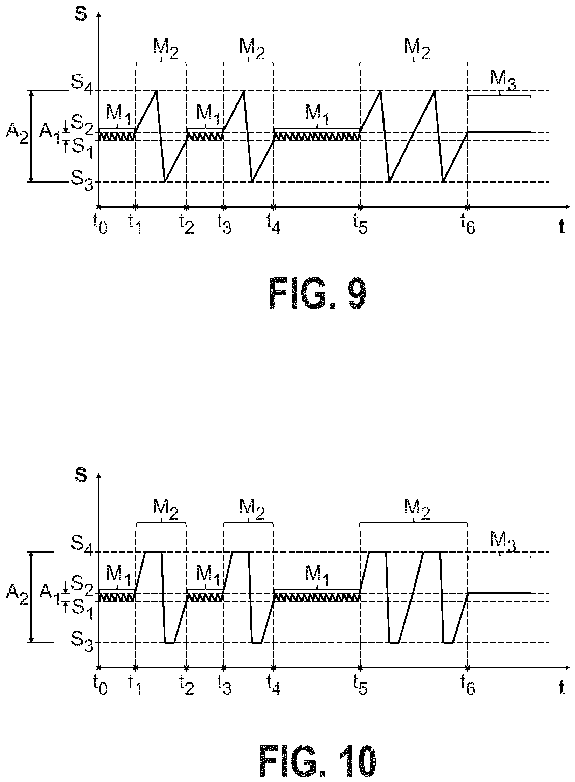

Fig. 9 zeigt in diesem Zusammenhang eine mögliche schematische Bewegungskurve der Austrittsöffnung 21. Über die Zeit t (nicht skaliert) ist der Weg s (nicht skaliert) der Austrittsöffnung 21 aufgetragen. Es ist zu erkennen, dass die Austrittsöffnung 21 drei unterschiedliche Bewegungsmodi M₁, M₂, M₃ durchführt.

Ein erster Bewegungsmodus M₁ wird zwischen einem Null-Zeitpunkt t₀ und einem ersten Zeitpunkt t₁, zwischen einem zweiten Zeitpunkt t₂ und einem dritten Zeitpunkt t₃ und zwischen einem vierten Zeitpunkt t₄ und einem fünften Zeitpunkt t₅ durchgeführt. Dieser Bewegungsmodus M₁ besteht in einer geringfügigen relativ schnellen Oszillationsbewegung zwischen zwei Positionen s₁, s₂. Die Bewegung der Austrittsöffnung 21 hat hier also nur eine geringe Amplitude A₁ bzw. einen geringen Hub A₁, und weist einen gleichförmigen Rhythmus mit einer verhältnismäßig hohen Frequenz auf. Diese Bewegung dient ausschließlich dem Flüssighalten des Dosierstoffs, wobei er jedoch nicht so stark verflüssigt wird, dass permanent Dosierstoff aus der Düse 19 gelangt. Der erste Bewegungsmodus M₁ kann daher auch als Flüssighaltemodus charakterisiert werden.

Der zweite Bewegungsmodus M₂, der zwischen dem ersten Zeitpunkt t₁ und dem zweiten Zeitpunkt t₂, zwischen dem dritten Zeitpunkt t₃ und dem vierten Zeitpunkt t₄ sowie zwischen dem fünften Zeitpunkt t₅ und einem sechsten Zeitpunkt t₆ durchgeführt wird, weist hingegen ein andersartiges Bewegungsmuster auf. Er dient dem Ausstoß des Dosierstoffs aus der Austrittsöffnung 21 und kann daher als Ausstoßmodus bezeichnet werden. Er hat daher eine größere Amplitude A₂ bzw. einen größeren Hub A₂. Seine Frequenz, die insbesondere bei der doppelten Ausstoßbewegung zwischen dem fünften Zeitpunkten t₅ und dem sechsten Zeitpunkt t₆ erkennbar ist, ist deutlich geringer als die der Bewegung im ersten Bewegungsmodus M₁. Der Rhythmus dieser Bewegung kann auch als gleichförmig bezeichnet werden. Der dritte Bewegungsmodus M₃, der nach dem sechsten Zeitpunkt t₆ durchgeführt wird, besteht aus einem einfachen Stillstand der Austrittsöffnung 21 und bewirkt, dass der Dosierstoff im Durchlassspalt 100 zunächst aufgrund seiner inneren Reibung abgebremst und dann gehalten wird, da seine Viskosität nicht mehr durch die Bewegung der Austrittsöffnung 21 reduziert wird.

Die Bewegungskurve gemäß Figur 10 unterscheidet sich von der Bewegungskurve gemäß Figur 9 lediglich durch den Ausstoßmodus M₄. Anstelle einer einfachen sägezahnförmigen Auf- und Abbewegung wie beim zweiten Bewegungsmodus M₂ gemäß Figur 9, hält die Austrittsöffnung 21 nun jeweils in einer unteren Position s₄ eine bestimmte Zeitspanne lang an. In dieser Zeit kann Dosierstoff vor den Stößel 3 nachströmen. Dann erfolgt eine sehr schnelle Bewegung der Austrittsöffnung 21 in Ausstoßrichtung E. In der maximalen oberen Position s₃, d.h. maximal nahe am Stößel 3, wird die Austrittsöffnung 21 dann wieder eine Zeit lang festgehalten. In dieser Zeit wird die Bewegung des Dosierstoffs etwas abgestoppt, um ein Nachtropfen des Dosierstoffs bei der anschließenden Bewegung der Austrittsöffnung 21 in der Rückzugsrichtung R zu vermeiden.

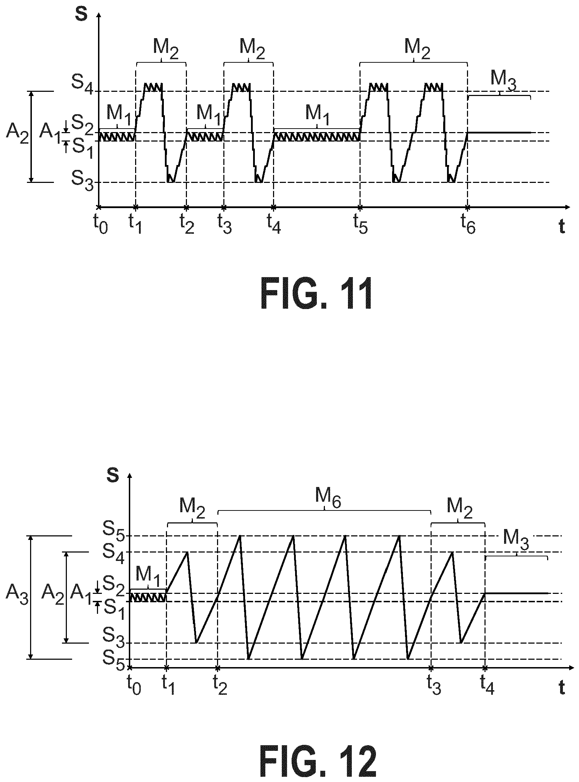

Die Bewegungskurve gemäß Figur 11 unterscheidet sich von der Bewegungskurve gemäß Figur 10 lediglich auch wiederum nur durch den Ausstoßmodus M₅. Hierbei wird dem Bewegungsmuster während der Ausstoßbewegung gemäß dem Bewegungsmodus M₄ nach Figur 9 einfach das Bewegungsmuster im ersten Bewegungsmodus M₁, das heißt die Zitterbewegung der Austrittsöffnung 21, überlagert. Dies ist sinnvoll, wenn es sich um einen Dosierstoff handelt, der relativ schnell seine Viskosität wieder erhöht, wenn die hochfeine Zitterbewegung aufhört. Durch die Überlagerung der Bewegungsmuster kann dafür gesorgt werden, dass permanent die Viskosität des Dosierstoffs verringert wird.

Figur 12 zeigt schließlich eine Bewegungskurve, welche beispielsweise dazu geeignet ist, durch enges Nebeneinandersetzen von einzelnen Punkten von Dosierstoff eine "Raupe", d. h. einen durchgehenden Streifen, mit gleichmäßiger Dicke zu ziehen. Je nach Dosierstoff kann es passieren, dass sowohl der erste Tropfen als auch der letzte Tropfen größer sind als die dazwischen dosierten Tropfen, auch wenn für jeden Tropfen die gleiche Hubhöhe der Austrittsöffnung 21 gewählt wird. In diesem Fall ist es sinnvoll, unterschiedliche Ausstoßmodi M₂, M₆ vorzusehen, die sich lediglich in ihren Hubhöhen voneinander unterscheiden. Beispielsweise kann für den ersten und für den letzten Tropfen jeweils ein Bewegungsmodus M₂ mit einem geringeren Hub höher gewählt werden, als für die dazwischen dosierten Tropfen.

Die Beispiele zeigen deutlich, dass es mit dieser Ausführungsform des erfindungsgemäßen Dosierverfahrens idealerweise möglich ist, die genauen Parameter der einzelnen Bewegungsmodi und die Abfolge der Bewegungsmodi exakt an den jeweils zu verarbeitenden Dosierstoff und die Dosieraufgabe anzupassen.

Es wird abschließend noch einmal darauf hingewiesen, dass es sich bei den vorhergehend detailliert beschriebenen Komponenten des Dosierventils bzw. des Dosiersystems und der Aktoreinrichtung lediglich um Ausführungsbeispiele handelt, welche vom Fachmann in verschiedenster Weise modifiziert und deren Merkmale neu kombiniert werden können, ohne den Bereich der Erfindung zu verlassen. So kann die Austrittsöffnung nicht nur alleine bewegt werden, während das Verschlusselement immer stillsteht, sondern das das Verschlusselement kann auch zeitweise bewegt werden. Das Verschlusselement kann hierzu im Dosierventil zwar bewegbar sein, jedoch nur selektiv (aufgrund der Steuerung) nur bestimmte Bewegungen zusätzlich zur Austrittsöffnung vollziehen. Auch die Austrittsöffnung muss dann nicht jede der Bewegungen parallel zu einem (bewegten) Verschlusselement ausführen, sondern kann ebenfalls nur selektiv bewegt werden, beispielsweise in Abhängigkeit vom gewählten (d. h. insbesondere programmierten) Bewegungsmodus. Entscheidend ist für die Erfindung, dass die Austrittsöffnung in mindestens einem der Bewegungsmodi bewegt wird. Ebenso kann z.B. eine Düse auch als einfache Blende ausgeführt sein, also anstatt als sich zur Austrittsöffnung hin verjüngende Vorrichtung mit Austrittsöffnung auch als eine im Wesentlichen plane Vorrichtung mit einem Austrittsbereich, in dem lediglich die Austrittsöffnung ausgespart ist und die Austrittsöffnung sich ebenfalls nicht verjüngt. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

### Bezugszeichenliste:

- 1: Dosierventil
- 3: Verschlusselement / Stößels
- 5: zweiter Gehäuseteil / Abdeckung
- 7: Aktoreinrichtung
- 7a, 7b, 7c, 7d, 7e, 7f: Aktorelemente
- 8a: erster (piezoelektrischer) Aktor
- 8b: zweiter (piezoelektrischer) Aktor
- 9: Steuerungseinheit
- 10: Verbindungsbohrungen
- 11: Heizvorrichtung
- 13a, 13b: Befestigungsschrauben
- 15: Düsenkappe
- 17: Düsenkörper
- 19: Düse
- 21: Austrittsöffnung
- 22: Ventilgehäuse
- 23: erstes Gehäuseteil
- 25: Elektronikgehäuse
- 27a, 27b: Druckluftanschlüsse
- 29: Dosierstoff-Zuführungseinheit
- 31a, 31b: Ringdichtungen
- 33: Ventilkammer
- 34: Ventilkammerkopf
- 35a, 35b: Auflagerflächen
- 36: Ventilkammergrundkörper
- 36a, 36b: Widerlagerflächen
- 37: Widerlagerblock / Widerlagermasse
- 38a, 38b: Rillen
- 39a, 39b: Tellerfedern
- 40a, 40b, 40c: Kühlungskanäle / Durchlassbohrungen
- 41: Halteschrauben
- 45: Hauptkörper
- 47a, 47b: Öffnungen
- 48a, 48b: Anschlussöffnungen
- 49: Öffnungen
- 53: Aktorenkammer
- 100: Durchlassspalt

- A: (Mittel-)Achse
- A₁, A₂: Amplituden / Hübe
- E: Ausstoßrichtung
- M₁, M₂, M₃, M₄, M₅, M₆: Bewegungsmodi
- R: Rückzugsrichtung
- s: Weg
- s₁, s₂, s₃, s₄: Positionen
- t: Zeit
- t₀, t₁, t₂, t₃, t₄, t₅, t₆: Zeitpunkte
- WR: Wirkrichtungsachse

## Patentansprüche

1. Dosierventil (1) zum Dosieren von Dosierstoff mit
einer Ventilkammer (33), welche eine Austrittsöffnung (21) aufweist,
einem in oder an der Ventilkammer (33) angeordneten Verschlusselement (3),
einer Ventilkammer-Lagerung (23), **dadurch gekennzeichnet dass**, das Dosierventil eine Aktoreinrichtung (7) enthält, um zumindest die Austrittsöffnung (21), vorzugsweise die Ventilkammer (33), gegenüber der Ventilkammer-Lagerung (23) im Betrieb in einer Ausstoß- (E) und/oder Rückzugsrichtung (R) so zu bewegen, dass im Betrieb in zumindest einem Bewegungsmodus bei einer Bewegung der Austrittsöffnung (21) in die Ausstoßrichtung (E) Dosierstoff vom Stößel (3) durch die Austrittsöffnung (21) gestoßen wird.

2. Dosierventil gemäß Anspruch 1, bei dem das Verschlusselement (3) feststehend an der Ventilkammer-Lagerung (23) fixiert ist.

3. Dosierventil gemäß einem der vorhergehenden Ansprüche, wobei die Aktoreinrichtung (7) mindestens einen ersten piezoelektrischen Aktor (8a) aufweist.

4. Dosierventil gemäß Anspruch 3, wobei die Aktoreinrichtung (7) mindestens zwei piezoelektrische Aktoren (8a, 8b) aufweist, die so gegenläufig geschaltet sind, dass ein erster piezoelektrischer Aktor (8a), wenn er im Betrieb expandiert wird, die Austrittsöffnung (21) in die Ausstoßrichtung (E) bewegt und ein zweiter piezoelektrischer Aktor (8b), wenn er im Betrieb expandiert wird, die Austrittsöffnung (21) in die Rückzugsrichtung (R) bewegt.

5. Dosierventil gemäß einem der vorhergehenden Ansprüche, wobei die Ventilkammer (33) zumindest teilweise von einer Gruppe von mehreren, vorzugsweise mindestens drei, parallel angeordneten und parallel wirkenden Aktorelementen (7a, 7b, 7c; 7d, 7e, 7f) eines Aktors (8a, 8b) umgeben ist.

6. Dosierventil gemäß Anspruch 5, wobei die Ventilkammer (33) zumindest teilweise von zwei Gruppen von Aktorelementen (7a, 7b, 7c; 7d, 7e, 7f) umgeben ist, wobei die Aktorelemente (7a, 7b, 7c) einer ersten Gruppe zu einem ersten Aktor (8a) zusammengeschaltet sind und die Aktorelemente (7d, 7e, 7f) einer zweiten Gruppe zu einem zweiten Aktor (8b) zusammengeschaltet sind.

7. Dosierventil gemäß Anspruch 5 oder 6, wobei die Aktorelemente (7a, 7b, 7c; 7d, 7e, 7f) eines Aktors (8a, 8b) parallel zu einer Bewegungsrichtungsachse (WR) verlaufen und bezüglich einer senkrecht zur Bewegungsrichtungsachse (WR) angeordneten Schnittebene gleichmäßig verteilt um die Ventilkammer (33) angeordnet sind.

8. Dosierventil gemäß einem der vorhergehenden Ansprüche, wobei die Ventilkammer (33) zweiteilig ausgebildet ist, mit einem im Bereich der Austrittsöffnung (21) angeordneten Ventilkammerkopf (34) und einem Ventilkammergrundkörper (36).

9. Dosierventil gemäß einem der vorhergehenden Ansprüche, wobei an der Ventilkammer (33) zumindest eine Auflagerfläche (35a, 35b) angeordnet ist, und sich ein Aktor (8a, 8b) zwischen der Auflagerfläche (35a, 35b) der Ventilkammer (33) und einer Widerlagerfläche (36a, 36b) der Ventilkammer-Lagerung (23) erstreckt und an der Auflagerfläche (35a, 35b) und der Widerlagerfläche (36a, 36b) abstützt.

10. Dosierventil gemäß einem der vorhergehenden Ansprüche, wobei eine Widerlagerfläche (36a) der Ventilkammer-Lagerung (23) an einer Widerlagermasse (37) angeordnet ist, welche wiederum federnd gelagert ist.

11. Dosierventil gemäß einem der vorhergehenden Ansprüche, wobei die Ventilkammer (33) eine, bevorzugt zwei, Öffnungen (47a, 47b) für einen Dosierstoff aufweist.

12. Dosierventil gemäß einem der vorhergehenden Ansprüche, wobei ein Ventilgehäuse (23) und/oder die Ventilkammer (33) mindestens einen Kühlungskanal (40a, 40b) aufweist, um im Betrieb ein Kühlmedium zur Kühlung der Aktoreinrichtung (7) hindurch zu leiten.

13. Dosierventil gemäß einem der vorhergehenden Ansprüche, wobei die Aktoren (8a, 8b) endseitig mit Auflagerflächen (35a, 35b) und/oder Widerlagerflächen (36a, 36b) über eine Ausgleichsmasse, vorzugsweise Klebstoff, verbunden sind.

14. Dosierverfahren für einen Dosierstoff mittels eines Dosierventils (1), welches eine Austrittsöffnung (21) und ein in oder an der Ventilkammer (33) angeordnetes Verschlusselement (3) aufweist, **dadurch gekennzeichnet dass**, zumindest die Austrittsöffnung (21), vorzugsweise die Ventilkammer (33), gegenüber einer Ventilkammer-Lagerung (23) im Betrieb in einer Ausstoß-(E) und/oder Rückzugsrichtung (R) bewegt wird, so dass in zumindest einem Bewegungsmodus bei einer Bewegung der Austrittsöffnung (21) in die Ausstoßrichtung (E) Dosierstoff vom Stößel (3) durch die Austrittsöffnung (21) gestoßen wird.

15. Dosierverfahren gemäß Anspruch 14, wobei die Aktoreinrichtung (7), welche einen ersten Aktor (8a) und/oder einen zweiten Aktor (8b) aufweist, die jeweils mindestens ein piezoelektrisches Aktorelement (7a, 7b, 7c, 7d, 7e, 7f) umfassen, in einem Standby-Modus so gesteuert wird, dass der erste Aktor (8a) und der zweite Aktor (8b) jeweils mit 50% ihrer maximal anlegbaren Spannung beaufschlagt werden.

## Claims

1. Metering valve (1) for the metering of a metering material, having
a valve chamber (33), which comprises an outlet aperture (21),
a closure element (3) arranged in or on the valve chamber (33),
a valve chamber casing (23)
**characterized in that** the metering valve contains an actuator assembly (7), in order to move at least the outlet aperture (21), preferably the valve chamber (33), relative to the valve chamber casing (23) in an ejection direction (E) and/or a retraction direction (R) such that, during operation in at least one movement mode, metering material is expelled by the tappet (3) through the outlet aperture (21) during a movement of the outlet aperture (21) in the ejection direction (E).

2. Metering valve according to Claim 1, wherein the closure element (3) is rigidly fixed to the valve chamber casing (23).

3. Metering valve according to any of the preceding claims, wherein the actuator assembly (7) comprises at least one first piezoelectric actuator (8a).

4. Metering valve according to Claim 3, wherein the actuator assembly (7) comprises at least two piezoelectric actuators (8a, 8b) oppositely connected such that a first piezoelectric actuator (8a), when expanded during operation, moves the outlet aperture (21) in the ejection direction (E), and a second piezoelectric actuator (8b), when expanded during operation, moves the outlet aperture (21) in the retraction direction (R).

5. Metering valve according to any of the preceding claims, wherein the valve chamber (33) is at least partially surrounded by a group of several, preferably at least three piezoelectric actuator elements (7a, 7b, 7c; 7d, 7e, 7f) of an actuator (8a, 8b), arranged in parallel and acting in parallel.

6. Metering valve according to Claim 5, wherein the valve chamber (33) is at least partially surrounded by two groups of actuator elements (7a, 7b, 7c; 7d, 7e, 7f), wherein the actuator elements (7a, 7b, 7c) of a first group are connected to give a first actuator (8a) and the actuator elements (7d, 7e, 7f) of a second group are connected to give a second actuator (8b).

7. Metering valve according to Claim 5 or 6, wherein the actuator elements (7a, 7b, 7c; 7d, 7e, 7f) of an actuator (8a, 8b) are aligned parallel to a movement direction axis (WR) and are uniformly arranged about the valve chamber (33) relative to an intersecting plane arranged perpendicularly to the movement direction axis (WR).

8. Metering valve according to any of the preceding claims, wherein the valve chamber (33) is a two-part entity comprising a valve chamber head (34) arranged in the region of the outlet aperture (21), and a valve chamber core body (36).

9. Metering valve according to any of the preceding claims, wherein at least one seat (35a, 35b) is arranged on the valve chamber (33), and an actuator (8a, 8b) extends between the seat (35a, 35b) of the valve chamber (33) and a counter-seat (36a, 36b) of the valve chamber casing (23), and is supported on the seat (35a, 35b) and the counter-seat (36a, 36b).

10. Metering valve according to any of the preceding claims, wherein a counter-seat (36a) of the valve chamber casing (23) is arranged on a counter-mass (37), which in turn is spring-loaded.

11. Metering valve according to any of the preceding claims, wherein the valve chamber (33) comprises one opening (47a, 47b), preferably two, for a metering material.

12. Metering valve according to any of the preceding claims, wherein a valve housing (23) and/or the valve chamber (33) comprises at least one cooling channel (40a, 40b) in order to convey a cooling medium for cooling the actuator assembly (7) during operation.

13. Metering valve according to any of the preceding claims, wherein the actuators (8a, 8b) are secured at their outer ends to seats (35a, 35b) and/or counter-seats (36a, 36b) by means of a levelling compound, preferably adhesive.

14. Method of metering a metering material by means of a metering valve (1) that has an outlet aperture (21) and a closure element (3) arranged in or on the valve chamber (33), **characterized in that** at least the outlet aperture (21), preferably the valve chamber (33), is moved in an ejection direction (E) and/or a retraction direction (R) relative to the valve chamber casing (23) during operation, so that metering material is ejected by the tappet (3) through the outlet aperture (21) during a movement of the outlet aperture (21) in the ejection direction (E) in at least one movement mode.

15. Metering method according to claim 14, wherein the actuator assembly (7), which comprises a first actuator (8a) and/or a second actuator (8b) that each comprise at least one piezo-electric actuator element (7a, 7b, 7c, 7d, 7e, 7f), is controlled in a standby mode such that the first actuator (8a) and the second actuator (8b) are each charged with 50% of their maximum applicable voltage.

## Revendications

1. Valve de dosage (1) pour le dosage d'une substance à doser
comportant une chambre de soupape (33), qui présente une ouverture de sortie (21), un élément d'obturation (3) disposé dans ou sur la chambre de soupape (33), un palier de chambre de soupape (23),
**caractérisée en ce que** la valve de dosage contient un dispositif d'actionneur (7), pour déplacer au moins l'ouverture de sortie (21), de préférence la chambre de soupape (33), par rapport au palier de chambre de soupape (23) lors du fonctionnement dans une direction d'éjection (E) et/ou de rétraction (R) de telle sorte que en fonctionnement dans au moins un mode de mouvement lors d'un mouvement de l'ouverture de sortie (21) dans la direction d'éjection (E) la substance à doser est éjectée par le poussoir (3) à travers l'ouverture de sortie (21).

2. Valve de dosage selon la revendication 1, dans laquelle l'élément d'obturation (3) est fixé de manière stationnaire sur le palier de chambre de soupape (23).

3. Valve de dosage selon une des revendications précédentes, dans laquelle le dispositif d'actionneur (7) présente au moins un premier actionneur (8a) piézoélectrique.

4. Valve de dosage selon la revendication 3, dans laquelle le dispositif d'actionneur (7) présente au moins deux actionneurs piézoélectriques (8a, 8b), qui sont branchés en sens opposé de telle sorte qu'un premier actionneur piézoélectrique (8a), lorsqu'il est expansé en fonctionnement, déplace l'ouverture de sortie (21) dans la direction d'éjection (E) et un deuxième actionneur piézoélectrique (8b), lorsqu'il est expansé en fonctionnement, déplace l'ouverture de sortie (21) dans la direction de rétraction (R).

5. Valve de dosage selon une des revendications précédentes, dans laquelle la chambre de soupape (33) est entourée au moins partiellement par un groupe de plusieurs éléments d'actionneur (7a, 7b, 7c ; 7d, 7e, 7f), de préférence au moins trois, disposés en parallèle et agissant en parallèle d'un actionneur (8a,8b).

6. Valve de dosage selon la revendication 5, dans laquelle le chambre de soupape (33) est entourée au moins partiellement par deux groupes d'éléments d'actionneur (7a, 7b, 7c ; 7d, 7e, 7f), dans laquelle les éléments d'actionneur (7a, 7b, 7c) d'un premier groupe sont interconnectés en un premier actionneur (8a) et les éléments d'actionneur (7d, 7e, 7f) d'un deuxième groupe sont interconnectés en un deuxième actionneur.

7. Valve de dosage selon la revendication 5 ou 6, dans laquelle les éléments d'actionneur (7a, 7b, 7c ; 7d, 7e, 7f), d'un actionneur (8a, 8b) s'étendent parallèlement à un axe de direction de mouvement (WR) et sont disposés en étant répartis uniformément par rapport à un plan de coupe disposé perpendiculairement à l'axe de direction de mouvement (WR) autour de la chambre de soupape (33).

8. Valve de dosage selon une des revendications précédentes, dans laquelle la chambre de soupape (33) est réalisée en deux parties (33), avec une tête de chambre de soupape (34) disposée au niveau de l'ouverture de sortie (21) et un corps de base de chambre de soupape (36).

9. Valve de dosage selon une des revendications précédentes, dans laquelle sur la chambre de soupape (33) au moins une surface d'appui (35a, 35b) est disposée, et un actionneur (8a, 8b) s'étend entre la surface d'appui (35a, 35b) de la chambre de soupape (33) et une surface de butée (36a, 36b) du palier de chambre de soupape (23) et s'appuie sur la surface d'appui (35a, 35b) et la surface de butée (36a, 36b).

10. Valve de dosage selon une des revendications précédentes, dans laquelle une surface de butée (36a) du palier de chambre de soupape (23) est disposée sur une masse de butée (37), qui est à son tour positionnée en ressort élastique.

11. Valve de dosage selon une des revendications précédentes, dans laquelle la chambre de soupape (33) présente une, de préférence deux ouvertures (47a, 47b) pour une substance à doser.

12. Valve de dosage selon une des revendications précédentes, dans laquelle un logement de soupape (23) et/ou la chambre de soupape (33)présente au moins un canal de refroidissement (40a, 40b), pour guider en fonctionnement un milieu de refroidissement au travers à des fins de refroidissement du dispositif d'actionneur (7).

13. Valve de dosage selon une des revendications précédentes, dans laquelle les actionneurs (8a, 8b) sont reliés du côté d'extrémité avec des surfaces d'appui (35a, 35b) et/ou des surfaces de butée (36a, 36b) par l'intermédiaire d'une masse d'égalisation, de préférence de la colle.

14. Procédé de dosage d'une substance à doser au moyen d'une valve de dosage (1), qui présente une ouverture de sortie (21) et un élément d'obturation (3) disposé dans ou sur la chambre de soupape (33), caractérisé en ce au moins l'ouverture de sortie (21), de préférence la chambre de soupape (33), est déplacée par rapport à un palier de chambre de soupape (23)en fonctionnement dans une direction d'éjection (E) et/ou de rétraction (R), de sorte que dans au moins un mode de mouvement lors d'un mouvement de l'ouverture de sortie (21) dans la direction d'éjection (E) une substance à doser est éjectée par le poussoir (3) à travers l'ouverture de sortie (21).

15. Procédé de dosage selon la revendication 14, dans lequel le dispositif d'actionneur (7), qui présente un premier actionneur (8a) et/ou un deuxième actionneur (8b), qui comprennent respectivement au moins un élément d'actionneur piézoélectrique (7a, 7b, 7c ; 7d, 7e, 7f), est commandé en un mode de veille de telle sorte que le premier actionneur (8a) et le deuxième actionneur (8b) soient appliqués respectivement avec 50% de leurs tension applicable maximale.
